(19) Europäisches Patentamt
European Patent Office
Office européen des brevets

(11) **EP 2 882 958 B1**

(12) **FASCICULE DE BREVET EUROPEEN**

(45) Date de publication et mention de la délivrance du brevet:
**14.12.2022 Bulletin 2022/50**

(21) Numéro de dépôt: **13758953.7**

(22) Date de dépôt: **07.08.2013**

(51) Classification Internationale des Brevets (IPC):
**F03B 13/14** *(2006.01)*   **F03B 13/24** *(2006.01)*

(52) Classification Coopérative des Brevets (CPC):
**F03B 13/24; F03B 13/142;** F05B 2240/40;
F05B 2240/9151; Y02E 10/30

(86) Numéro de dépôt international:
**PCT/FR2013/051909**

(87) Numéro de publication internationale:
**WO 2014/023920 (13.02.2014 Gazette 2014/07)**

(54) **SYSTEME DE CONVERSION D'ENERGIE DE LA HOULE OU DES VAGUES**

SYSTEM ZUM KONVERTIEREN VON WELLENGÄNGEN ODER WELLENENERGIE

SYSTEM FOR CONVERTING OF SWELL OR OF WAVE ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **07.08.2012  FR 1202196**

(43) Date de publication de la demande:
**17.06.2015  Bulletin 2015/25**

(73) Titulaire: **Stanek, Jean Luc**
**33650 St Medard d'Eyrans (FR)**

(72) Inventeur: **Stanek, Jean Luc**
**33650 St Medard d'Eyrans (FR)**

(74) Mandataire: **Regimbeau**
**20, rue de Chazelles**
**75847 Paris Cedex 17 (FR)**

(56) Documents cités:
WO-A2-2011/162615     DE-A1-102009 008 211
DE-A1-102009 013 014   JP-A- H03 294 663
US-A- 4 622 473       US-A1- 2009 001 729
US-A1- 2009 102 199

## Description

### DOMAINE TECHNIQUE

Il est question du domaine technique des systèmes de conversion d'énergie issue de la houle.

### ETAT DE LA TECHNIQUE

On connait des systèmes de conversion d'énergie issue de la houle, comprenant au moins une colonne renfermant de l'eau qui est en oscillation selon une direction verticale.

Une telle colonne est généralement constituée d'une chambre ouverte dans sa partie inférieure et plongée partiellement dans un volume d'eau soumis à l'action de la houle.

De la sorte, les mouvements de houle provoquent périodiquement une surpression dans la partie basse de la colonne.

Le mouvement montant du niveau de l'eau dans la colonne qui résulte d'une telle surpression, comprime un gaz (typiquement de l'air) disposé dans la partie supérieure de la colonne.

Le gaz comprimé est dirigé par des conduites vers un dispositif tel qu'un aérogénérateur pour convertir l'énergie issue du mouvement de l'eau, par exemple en une énergie électrique.

La colonne peut être munie d'un système de clapets permettant l'admission de gaz (typiquement de l'air ambiant) dans la colonne lorsque le niveau de l'eau redescend dans cette colonne, suite aux mouvements de houle.

Il existe de tels systèmes utilisant un aérogénérateur bidirectionnel dont le sens de fonctionnement change en fonction du mouvement de l'eau dans la colonne.

Une autre configuration de ces systèmes, dans laquelle le flux de gaz est rendu unidirectionnel, est par ailleurs connue.

Le document GB 2 161 544 A illustre une telle configuration.

Dans une telle configuration, chaque colonne comprend dans sa partie supérieure une première soupape anti-retour permettant la circulation de gaz comprimé vers un aérogénérateur, et une deuxième soupape anti-retour permettant l'arrivée de gaz depuis le côté basse pression de l'aérogénérateur.

Les flux de gaz issus des colonnes sont captés par des collecteurs et le gaz est également redistribué entre les colonnes après passage dans l'aérogénérateur par des collecteurs. Ces collecteurs sont réalisés sous la forme de réseaux de tuyaux.

Les systèmes connus présentent ainsi une solution potentiellement intéressante pour convertir l'énergie de la houle. Et la configuration à flux de gaz unidirectionnel mentionnée ci-dessus constitue une option particulièrement prometteuse.

L'architecture de ces systèmes connus est généralement proposée avec une série de colonnes, les colonnes étant disposées en ligne et chaque colonne étant reliée à l'aérogénérateur.

Mais les systèmes connus sont complexes et coûteux à réaliser, et ne peuvent être réalisés que dans des lieux présentant une forte houle.

Le fonctionnement de ces systèmes exige en effet que la ligne de colonnes soit orientée de manière particulière par rapport à la houle. Et en tout état de cause le rendement du système sera affecté par l'orientation de la ligne de colonnes par rapport à la direction de propagation de la houle.

De plus, la circulation du gaz comprimé dans des réseaux de tuyaux induit une inertie pneumatique du système, qui pénalise son rendement. Ces tuyaux génèrent également des pertes de charge qui elles aussi pénalisent le rendement du système.

Par ailleurs, de telles structures présentent une exposition importante à la mer, et les colonnes doivent en conséquence être dimensionnées de manière particulièrement importante (épaisseur des parois de colonnes, etc.).

Enfin, si la houle ou les mouvements de diffraction à la surface de l'eau sont tels que l'onde à la surface de l'eau forme un front se propageant parallèlement aux lignes, toutes les colonnes seront en surpression au même moment et en dépression au même moment.

De plus, dans cette hypothèse, si le système est un système flottant, il risque de remonter au gré de la houle sans modification de niveau de l'eau dans les colonnes.

Il en résulte une baisse de rendement car le système fonctionne en deux temps successifs d'entrée de gaz puis de sortie de gaz pour toutes les colonnes et que les collecteurs en amont et en aval de l'aérogénérateur sont saturés par le gaz entrant ou sortant au lieu d'un partage du flux entre les deux collecteurs.

Le document DE 10 2009 013014 A1 décrit une centrale houlomotrice pour l'entraînement d'une centrale à fluide. Le document JP H03294663 A décrit un procédé et un dispositif pour génération d'énergie des vagues. Le document US 2009/001729 A1 décrit un système de captage d'énergie modulaire alimenté par les vagues. Le document WO 2011/162615 A2 décrit un système de récupération d'énergie de vagues océaniques.

### PRESENTATION

Un but de l'invention est de pallier au moins un des inconvénients présentés ci-avant.

A cet effet, il est prévu un système de conversion d'énergie issue de la houle et/ou des vagues, comprenant un réseau de colonnes de compression d'eau, chaque colonne présentant :

- une extrémité inférieure adaptée pour être plongée dans un volume d'eau subissant l'action de la houle, l'extrémité inférieure présentant une ouverture pour accueillir l'eau du volume d'eau dans la colonne, de sorte à former une chambre comprenant un gaz dans une partie supérieure de la colonne,

- une première soupape anti-retour en communication fluidique depuis ladite colonne vers un caisson de surpression commun aux colonnes du réseau,
- une deuxième soupape anti-retour en communication fluidique depuis un caisson de dépression commun aux colonnes du réseau vers ladite colonne,

dans lequel le caisson de surpression et le caisson de dépression sont connectés fluidiquement par une turbine, et

dans lequel les colonnes du réseau sont disposées de manière contiguë, et en ce que le réseau s'étend selon au moins deux directions non parallèles, dans lequel les premières soupapes anti-retour des colonnes du système sont disposées selon des premières lignes, et les deuxièmes soupapes anti-retour des colonnes du système sont disposées selon des deuxièmes lignes, dans lequel chaque première ligne est disposée au niveau d'une première portion du caisson de surpression et chaque deuxième ligne est disposée au niveau d'une deuxième portion du caisson de dépression, les premières portions et deuxièmes portions étant disposées en alternance au-dessus des colonnes, dans lequel chaque première portion, respectivement deuxième portion, a une section croissante, respectivement décroissante, dans le sens d'écoulement du gaz.

L'invention est avantageusement complétée par les caractéristiques suivantes, prises seules ou en une quelconque de leurs combinaisons techniquement possibles :

- pour chaque colonne la première soupape anti-retour et la deuxième soupape anti-retour sont disposées au-dessus de la colonne,
- les lignes sont des alignements rectilignes parallèles entre eux,
- les soupapes forment une alternance de premières lignes et de deuxièmes lignes au-dessus des colonnes,
- les premières portions sont chacune connectées à une même première chambre du caisson de surpression disposée entre chaque première portion et la turbine, et les deuxièmes portions sont chacune connectées à une même deuxième chambre du caisson de dépression disposée entre chaque deuxième portion et la turbine,
- la première chambre et la deuxième chambre sont disposées au-dessus de l'alternance de premières portions et de deuxièmes portions,
- la première chambre et la deuxième chambre sont disposées de part et d'autre de l'alternance de premières portions et de deuxièmes portions,

- la première chambre, respectivement deuxième chambre, a une section croissante, respectivement décroissante, dans le sens d'écoulement du gaz,
- chaque première portion comprend deux premières lignes successives et chaque deuxième portion comprend deux deuxièmes lignes successives,
- chaque colonne comprend un dispositif flotteur interne adapté pour empêcher l'eau de pénétrer depuis la colonne dans les soupapes,
- chaque colonne comprend un dispositif flotteur interne adapté pour empêcher l'air de sortir de la colonne par l'ouverture,
- chaque colonne comprend un dispositif flotteur interne adapté pour se déplacer dans la colonne, le dispositif flotteur interne présentant des moyens de nettoyage des parois latérales de la colonne,
- un dispositif de régulation de pression, adapté pour ajuster la moyenne de la pression du caisson de surpression et de la pression du caisson de dépression par rapport à la pression atmosphérique,
- le caisson de surpression et/ou le caisson de dépression comprend un dispositif d'évacuation d'eau,
- des moyens de déflection de la houle par rapport aux ouvertures des colonnes,
- les moyens de déflection comprennent des cloisons mobiles disposées de part et d'autre, et/ou au-dessous des colonnes

L'invention concerne également un ensemble de conversion d'énergie issue de la houle et/ou des vagues comprenant une pluralité de systèmes tel que décrits précédemment, les systèmes étant connectés entre eux.

## DESSINS

D'autres objectifs, caractéristiques et avantages apparaitront à la lecture de la description qui suit donnée à titre illustratif et non limitatif en référence aux dessins, parmi lesquels :

- la figure 1 représente une vue en perspective d'un système selon un premier exemple de mode de réalisation de l'invention, en transparence d'une paroi latérale du système,
- la figure 2 représente une vue de dessus du système de la figure 1, en transparence d'un toit du système,
- la figure 3 représente une vue en coupe de dessus selon un plan D-D d'un système selon un deuxième exemple de mode de réalisation de l'invention,
- la figure 4 représente une vue en coupe latérale selon un plan A-A du système de la figure 3,
- la figure 5a représente une vue en coupe latérale selon un plan B-B du système de la figure 3, lorsque le niveau de l'eau augmente dans des colonnes du système représentées,
- la figure 5b représente une vue en coupe latérale selon un plan C-C du système de la figure 3, lorsque le niveau de l'eau diminue dans des colonnes du système représentées,

- la figure 6a représente une vue de face d'un système selon un troisième exemple de mode de réalisation de l'invention, en transparence d'une paroi latérale du système, présentant des moyens de déflection de la houle, en cas de mer calme,
- la figure 6b représente une vue de face d'un système selon le troisième exemple de mode de réalisation de l'invention, en transparence d'une paroi latérale du système, présentant des moyens de déflection de la houle, en cas de mer forte,
- la figure 7 représente une vue en perspective d'un système selon un quatrième exemple de mode de réalisation de l'invention, présentant des éléments de flottaison,
- la figure 8 représente un dispositif de flotteur interne d'une colonne d'un système selon un autre exemple de mode de réalisation particulier de l'invention,
- la figure 9 représente une vue en perspective d'un ensemble de conversion d'énergie issue de la houle, comprenant plusieurs systèmes selon un autre exemple de mode de réalisation de l'invention.

## DESCRIPTION

## Structure générale du système

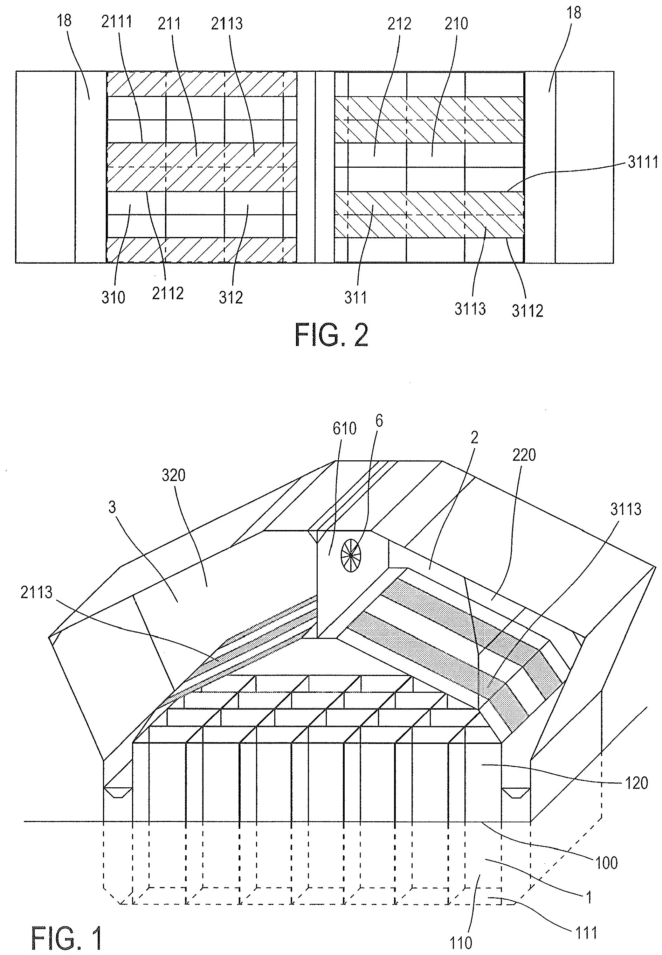

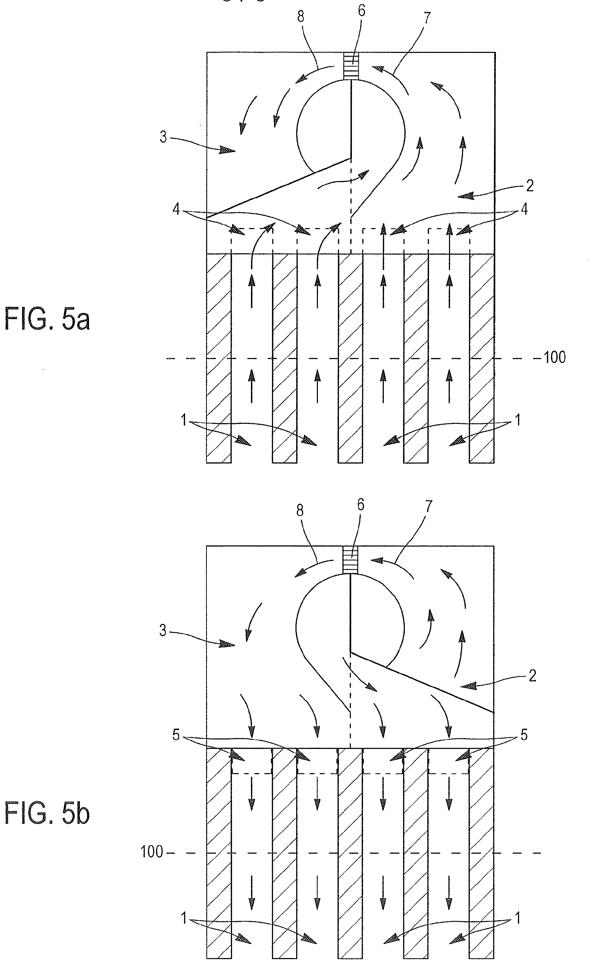

En référence aux figures 1 à 9, il décrit un système de conversion d'énergie issue de la houle et/ou des vagues.

Par houle et/ou vague on entendra toute oscillation de la surface de la mer, quelle que soit son origine (marée, vents, navires).

En particulier, un tel système peut ainsi permettre de convertir l'énergie issue des vagues aléatoires qui ne sont pas directement associées à la houle.

Le système comprend un réseau de colonnes 1 de compression d'eau.

Par colonne 1, on entend une structure creuse comprenant une ou plusieurs parois latérales s'étendant selon une direction sensiblement verticale entre deux extrémités et délimitant un espace intérieur séparé de l'extérieur. Chaque colonne permet l'écoulement d'un fluide entre ses extrémités.

Chaque colonne 1 présente une première extrémité, dite extrémité inférieure 110, adaptée pour être plongée dans un volume d'eau subissant l'action de la houle.

On comprendra ici les termes « inférieur » et « supérieur » comme des termes de position relative des éléments selon leur hauteur, c'est-à-dire selon leur altitude par rapport à un niveau de référence tel que le niveau de la mer à l'endroit où le système est destiné à être positionné et lors d'un usage normal du système.

Le système est donc configuré de telle sorte qu'en usage normal, l'extrémité inférieure 110 de chaque colonne 1 est située sous le niveau de l'eau 20.

L'extrémité inférieure 110 présente une ouverture 111 pour accueillir l'eau du volume d'eau dans la colonne 1, de sorte à former une chambre comprenant un gaz dans une partie supérieure 120 de la colonne 1.

De cette manière, le gaz est piégé dans la chambre et ne peut s'échapper par l'ouverture 111 car cette dernière est placée plus bas, sous l'eau.

En usage normal, l'ouverture 111 est donc placée sous l'eau. L'ouverture 111 est configurée de telle sorte que l'eau dans la colonne 1 subisse l'action de la houle qui s'applique au volume d'eau.

Le gaz est typiquement de l'air.

La partie supérieure 120, pour former une chambre, délimite donc avec le niveau de l'eau à l'intérieur de la colonne 1 un espace dans lequel le gaz peut être comprimé.

De plus, la colonne 1 est dimensionnée de telle sorte que les oscillations de l'eau peuvent comprimer le gaz, c'est-à-dire augmenter effectuer un effort mécanique sur le gaz, typiquement en réduisant le volume de la chambre dans laquelle il se trouve.

Or un mouvement oscillatoire tel que la houle correspond à une onde qui se propage à la surface de l'eau. Cette onde forme une succession spatiale de zones où le niveau de l'eau est plus élevé par rapport à des zones où le niveau de l'eau est plus bas. En un point de donné de la surface l'oscillation forme une succession dans le temps de périodes où le niveau de l'eau augmente et de moments où le niveau de l'eau diminue.

Ainsi, si la paroi latérale de la colonne 1 est configurée de sorte à ce que l'eau présente une surface trop grande à l'intérieur de la colonne 1, il y aura à l'intérieur de la colonne 1 des zones où le niveau de l'eau sera plus élevé et des zones où le niveau de l'eau sera plus bas. L'effet des unes compensant celui des autres, aucun effort de compression ou de dépression ne sera appliqué au gaz dans la chambre.

L'espace intérieur des colonnes 1 doit donc être dimensionné de sorte à ce que le niveau de l'eau à l'intérieur de la colonne 1 soit alternativement en moyenne en augmentation ou en diminution, c'est-à-dire que le volume de la chambre augmente et diminue alternativement. Ceci est possible en choisissant des sections intérieures suffisamment petites pour les colonnes 1 par rapport au mouvement de houle observé dans la zone où le système doit être placé.

Bien entendu, l'homme du métier saura dimensionner de la sorte les colonnes 1, tout en évitant de réduire trop leur section, ce qui aurait pour conséquence de multiplier le nombre de colonnes par surface et de diminuer le rendement global du système.

Chaque colonne 1 présente une première soupape anti-retour 4. Cette première soupape anti-retour 4 est en communication fluidique depuis ladite colonne 1 vers un caisson de surpression 2 commun aux colonnes 1 du réseau.

Cette première soupape anti-retour 4 est donc adaptée pour permettre au gaz situé dans la chambre d'entrer dans le caisson de surpression 2 lorsque le niveau de l'eau augmente dans la colonne 1, soumettant le gaz de la chambre à un effort de compression. L'effort de compression maximum est obtenu à la crête de l'onde.

Par ailleurs, cette première soupape anti-retour 4 permet d'éviter que le gaz dans le caisson de surpression 2 ne retourne directement dans l'une des colonnes 1, et ce quelle que soit la pression des différentes colonnes 1 entre elles et vis-à-vis du caisson de surpression 2.

Chaque colonne 1 présente une deuxième soupape anti-retour 5 en communication fluidique depuis un caisson de dépression 3 commun aux colonnes du réseau vers ladite colonne 1.

Cette première soupape anti-retour 4 est donc adaptée pour permettre au gaz situé dans le caisson de dépression 3 d'entrer dans la chambre lorsque le niveau de l'eau diminue dans la colonne 1, soumettant le gaz de la chambre à un effort de dépression. L'effort de dépression maximum est obtenu au creux de l'onde.

Par ailleurs, cette première soupape anti-retour 4 permet d'éviter que le gaz dans l'une des colonnes 1 ne retourne directement dans le caisson de dépression 3, et ce quelle que soit la pression des différentes colonnes 1 entre elles et vis-à-vis du caisson de dépression 2.

Toutes les colonnes 1 étant connectées de la sorte au caisson de surpression 2 et au caisson de dépression 3, il est possible d'obtenir dans le caisson de surpression 2 une surpression relativement au caisson de dépression 3.

Dans le système, le caisson de surpression 2 et le caisson de dépression 3 sont connectés fluidiquement par une turbine 6. La différence de pression entre les caissons 2 et 3 provoque un mouvement du gaz du caisson de surpression 2 vers le caisson de dépression 3 par la connexion fluidique.

La turbine 6 est ainsi mise en mouvement et peut donc convertir l'énergie reçue de cette manière en une autre énergie, typiquement en une énergie électrique. Le système peut ainsi convertir l'énergie issue de la houle en une autre énergie.

Par ailleurs, les colonnes 1 du réseau sont disposées de manière contigüe. En d'autres termes elles sont directement attenantes.

Par contigüe, on entend non seulement le cas où les colonnes 1 partagent une paroi, ou une partie de paroi, commune, en d'autres termes telle que chacun des deux côtés de la paroi est une face interne d'une colonne 1, mais également le cas où les parois des colonnes 1 sont adjacentes.

Par colonnes 1 adjacentes, on entend que les parois respectives des colonnes 1 sont au contact l'une de l'autre, ou connectées ou disposées de sorte à ne pas permettre à de l'eau de s'immiscer dans l'espace entre deux colonnes 1 placées immédiatement l'une à côté de l'autre dans le réseau.

Par colonnes 1 adjacentes, on entend encore le cas où, si un faible volume d'eau peut s'introduire dans cet espace, que ce faible volume d'eau ne peut pas subir l'action de la houle ou ne peut pas reproduire le mouvement oscillatoire issu de l'action de la houle.

De plus, le réseau de colonnes 1 contigües s'étend selon au moins deux directions non parallèles, c'est-à-dire qu'il s'étend selon un plan et non selon seulement une ligne. Au moins trois colonnes ne sont donc pas alignées.

Le réseau de colonnes 1 tend donc à former un pavement de la surface de l'eau.

Il peut s'agir par exemple d'une pluralité de lignes ou d'alignements de colonnes 1 contigus. On comprendra toutefois que la présente invention n'est limitée à aucune géométrie en particulier.

Ainsi, en parcourant le système selon n'importe quelle direction d'un plan sensiblement horizontal (typiquement un plan coïncidant avec la surface de l'eau), on rencontre successivement au moins deux colonnes. Et donc, quelle que soit l'orientation du système par rapport à la houle, certaines colonnes 1 sont situées au niveau d'une zone où le niveau de l'eau est plus élevé alors que d'autres sont situées au niveau d'une zone où le niveau de l'eau est plus faible (cela correspond dans ce cas à parcourir le système selon une direction sensiblement horizontale de propagation de la houle). De cette manière, le caisson de surpression 2 est alimenté en air et le caisson de dépression 3 se vide en même temps.

Contrairement aux systèmes selon l'art antérieur, le système selon l'invention fonctionne toujours de manière continue lorsque le volume d'eau est soumis à l'action de la houle, et quel que soit le profil de propagation de la houle.

En particulier, une faible houle suffit pour permettre l'augmentation de la pression dans le caisson de surpression 2 et la diminution de pression dans le caisson de dépression 3, et donc d'entraîner la turbine 6.

L'organisation du réseau de colonnes selon l'invention permet donc au système de fonctionner quelle que soit la nature de la houle. De plus, un système avec une telle organisation du réseau de colonnes, étendue selon deux directions non parallèles, présente une stabilité sur l'eau plus importante que les systèmes selon l'art antérieur, et donc de continuer à fonctionner même en cas de mer forte ou de tempête. Le système selon l'invention est donc polyvalent et facilement adaptable à des configurations géographiques et climatiques variables.

Il en résulte un rendement plus élevé et un système plus aisé à positionner car il fonctionnera quelle que soit son orientation vis-à-vis de la houle.

De plus, un tel système ne subira pas de pertes de rendement dues à des phénomènes de diffraction qui impliqueraient que la longueur d'onde spatiale des mouvements oscillatoires du niveau de l'eau soit proche de l'espacement entre les colonnes.

En effet les colonnes 1 sont ici trop proches et tendent à former un pavement, ce qui empêche que toutes les colonnes 1 aient en même temps le même niveau d'eau.

Par ailleurs, cette organisation contigüe et selon deux directions non parallèle implique qu'une surface importante des colonnes 1 est tourné vers les autres colonnes 1 et n'est donc pas exposé à la mer.

L'usure mécanique provoquée par les mouvements de l'eau est donc limitée aux zones périphériques du réseau.

Il en résulte un système plus robuste que dans l'art antérieur. Par ailleurs ce système est plus aisé et moins coûteux à fabriquer car seules les parois des colonnes disposées en périphérie du réseau sont à protéger des effets de l'exposition à la mer.

En outre, le système assure un rendement important car cette organisation des colonnes permet d'organiser plus efficacement la collecte de l'air en surpression et sa redistribution.

La compacité du système selon l'invention permet de réduire, voire de supprimer les grandeurs longueurs de tuyaux nécessaires aux systèmes selon l'art antérieur, obstacle qui limite le nombre de colonnes pouvant être connectées aux systèmes selon l'art antérieur en raison des pertes de rendement associés à ces longueurs de tuyaux.

Les caissons 2 et 3 peuvent être partagés entre un nombre plus important de colonnes et peuvent être disposés et dimensionnés de manière à mutualiser l'acheminement de l'air vers ou depuis la turbine 6 et à limiter l'accélération du gaz et la saturation du système d'écoulement du gaz en ce point du système et donc à limiter les pertes de charges associées.

Alors que les systèmes selon l'art antérieur étaient limités à la conversion d'énergie issue de la houle directionnelle, le système selon l'invention permet de convertir en complément ou en remplacement l'énergie issue de toute vague, aléatoire ou non, quelle que soit sa forme ou sa direction.

**Réseau de colonnes**

*Forme des colonnes*

Les colonnes 1 peuvent présenter toute forme adaptée à la réalisation de l'invention.

Les colonnes 1 ont par exemple une forme générale cylindrique, par exemple une forme cylindrique s'étendant entre leur extrémité inférieure 110 et leur extrémité supérieure.

Par cylindre, on entend un volume creux délimité latéralement par une surface générée à partir d'une droite dite génératrice ayant une direction fixe et décrivant une courbe plane fermée dite courbe directrice, la surface étant délimitée en hauteur, par exemple par deux plans parallèles.

En référence aux figures 1 à 6b, les colonnes présentent par exemple des formes cylindriques de courbe directrice rectangulaire, en d'autres termes des formes parallélépipédiques. Les colonnes peuvent présenter d'autres formes cylindriques, par exemple des formes de cylindre de révolution (section circulaire), des formes tubulaires ou des formes prismatiques en général (section polygonale).

Les colonnes 1 sont de préférence orientées verticalement.

Les colonnes 1 peuvent comprendre des moyens de variation de hauteurs de colonnes. Les colonnes 1 sont donc par exemple des colonnes à hauteur variable. Selon un mode de réalisation particulier, chaque colonne 1 peut ainsi comprendre un tube téléscopique et/ou une culasse mobile pour rehausser la colonne 1 et de manière générale le système. Il est ainsi possible de réguler le niveau d'eau à l'intérieur des colonnes 1.

Les colonnes 1 peuvent présenter la même forme, comme illustré aux figures 1 à 6b, ou présenter des formes différentes.

*Ouverture des colonnes*

Comme illustré aux figures 1 à 6b, l'ouverture 111 de l'extrémité inférieure 110 des colonnes 1 peut être orientée vers le bas.

L'ouverture 111 peut être orientée selon d'autres directions. Par exemple l'ouverture 111 peut être placée latéralement au niveau des colonnes 1, par exemple au niveau des colonnes 1 disposées en périphérie du réseau. L'ouverture 111 peut également être disposée latéralement pour plusieurs des colonnes 1 disposées en dehors de la périphérie, notamment si les colonnes sont dimensionnées pour que leurs extrémités inférieures 110 s'étendent à des hauteurs différentes.

*Parois*

En référence aux figures 1 à 6b, certaines parois des colonnes 1 peuvent être communes à plusieurs colonnes.

Alternativement, certaines parois des colonnes 1 peuvent être disposées l'une contre l'autre ou de manière adjacente.

*Organisation du réseau*

Les colonnes 1 peuvent être organisées selon des lignes, en particulier selon des alignements, par exemple selon plusieurs lignes et/ou rangées contigües.

Par ligne, on entend une ligne de colonnes 1 contigües. Les lignes sont par exemple des lignes courbes ou des lignes droites, c'est-à-dire des alignements.

En référence aux figures 1 à 6b, les colonnes peuvent être en particulier organisés selon des alignements rectilignes et parallèles entre eux. Le réseau peut alors s'étendre selon deux directions orthogonales, de sorte à former un quadrillage de la surface d'eau par les colonnes 1.

Alternativement, les colonnes 1 peuvent être organisées selon des lignes qui ne sont pas des droites, par exemple selon des courbes, par exemple selon des courbes concentriques.

Les colonnes 1 et le réseau peuvent être dimensionnés en fonction de la longueur d'onde caractéristique de la houle. Ainsi il est possible de choisir une section de colonnes 1, une hauteur de colonnes 1, et un type de lignes du réseau adaptées à un certain type de houle, c'est-à-dire à une certaine segmentation des vagues pour optimiser le rendement du système.

**Soupapes anti-retour et caissons**

*Soupapes*

Pour chaque colonne 1, la première soupape anti-retour 4 et/ou la deuxième soupape anti-retour 5 peut être disposée au-dessus de la colonne 1.

Alternativement, une ou plusieurs soupapes peuvent être disposées latéralement, notamment pour les colonnes situées en périphérie du réseau, ou pour des colonnes 1 qui ne sont pas situées en périphérie si les extrémités de ces colonnes 1 s'étendent à des hauteurs différentes des colonnes 1 contigües.

*Organisation des soupapes et des caissons*

Les premières soupapes 4 des colonnes 1 du système sont disposées selon des premières lignes, par exemple des alignements. Les deuxièmes soupapes 5 des colonnes 1 du système sont alignées selon des deuxièmes lignes, par exemple des alignements.

Par ligne, on entend géométriquement un trait continu reliant des éléments. La ligne peut être par exemple droite ou courbe.

La disposition selon des lignes implique typiquement que les différentes lignes ne se croisent pas, c'est-à-dire que les éléments d'une ligne ne peuvent être disposés de part et d'autre d'une autre ligne. Le croisement peut être défini vis-à-vis d'une projection dans un plan, typiquement une projection selon un plan défini par la surface moyenne de l'eau.

Une ligne de soupapes 4 ou 5 est typiquement une ligne de soupapes 4 ou 5 de colonnes 1 contigües.

Une ligne de soupapes 4 ou 5 peut être une ligne de soupapes 4 ou 5 contigües, en particulier si les soupapes 4 ou 5 sont arrangées différemment des colonnes 1 correspondantes.

Les soupapes anti-retour sont par exemple des clapets.

De tels lignes ou alignements permettent de diminuer le volume total de la structure, et de connecter plus efficacement les soupapes entre elles de sorte à diminuer les pertes liées aux collecteurs.

Les lignes ou alignements de soupapes 4 et/ou 5 peuvent être rectilignes et parallèles entre eux, comme illustré aux figures 1 à 6b.

Les soupapes 4 et 5 forment une alternance de premières lignes et de deuxièmes lignes au-dessus des colonnes 1.

Selon l'invention, chaque première ligne est disposée au niveau d'une première portion 210 du caisson de surpression 2 et chaque deuxième ligne est disposée au niveau d'une deuxième portion 310 du caisson de dépression 3. Les premières portions et deuxièmes portions sont alors disposées en alternance au-dessus des colonnes 1.

On obtient alors une structure dans laquelle, comme illustré par les figures 1 à 6b, les caissons 2 et 3 sont entrelacés au-dessus des colonnes 1. Les portions des caissons 2 et 3 disposées en alternance peuvent être séparées par des parois communes.

Ainsi, il est possible de connecter directement chaque colonne 1 à chacun des caissons 2 et 3 sans avoir recours à des collecteurs au niveau des soupapes 4 et 5 pour chaque ligne ou alignement, ou de limiter fortement les longueurs de collecteurs nécessaires et donc de limiter par là-même les pertes associées à de tels collecteurs.

Les premières portions présentent des formes de section croissante dans le sens d'écoulement du gaz. De même, les deuxièmes portions présentent des formes de section décroissante dans le sens d'écoulement du gaz. Il est ainsi possible d'éviter la limitation de l'écoulement du gaz, notamment due à une contrepression dans les caissons 2 et 3 au voisinage des soupapes, et donc de limiter les pertes de charge.

De plus, toutes les soupapes ne sont pas nécessairement ouvertes en même temps dans une même portion. Ceci diminue d'autant plus les risques d'accélération ou de saturation du flux de gaz par rapport à des collecteurs dédiés à chaque soupape.

En particulier, les premières portions 210 peuvent être chacune connectées à une même première chambre 220 du caisson de surpression 2, la première chambre étant disposée entre chaque première portion 210 et la turbine 6.

Les deuxièmes portions 310 peuvent être chacune connectées à une même deuxième chambre 320 du caisson de surpression 2, la deuxième chambre étant disposée entre chaque deuxième portion 210 et la turbine 6.

Par connecté, on entend une connexion fluidique, typiquement une connexion fluidique directe, typiquement que chaque portion débouche directement sur la première ou deuxième chambre correspondante.

Chaque caisson 2 ou 3 peut alors comprendre une partie ayant une forme générale de peigne, les portions formant les dents du peigne et la première ou deuxième chambre formant le manche du peigne. Les peignes des deux caissons 2 et 3 sont alors insérés l'un dans l'autre au niveau de leurs dents. Il en résulte un gain d'espace important, et donc une diminution des coûts de réalisation de la structure ainsi qu'une diminution des pertes.

La première chambre 220 ou la deuxième chambre 320 est typiquement un bras. Par bras, on entend ici une portion du caisson étendue de sorte à ce que les portions correspondantes débouchent dessus.

La première chambre 220 peut présenter une forme de section croissante dans le sens d'écoulement du gaz.

En particulier la première chambre 220 peut présenter une forme dont la section est supérieure à la somme de chaque section d'une ouverture disposée en amont, chaque ouverture correspondant à une première portion 210 débouchant sur la première chambre 220 en amont de la section.

Ainsi, typiquement lorsque les premiers portions 210 sont de section croissante, la première chambre 220 peut présenter une forme dont la section est supérieure à la somme des sections maximales de chaque première portion 210 débouchant sur la première chambre 220 en amont de la section.

De même, la deuxième chambre 320 peut présenter une forme de section décroissante dans le sens d'écoulement du gaz.

En particulier la deuxième chambre 320 peut présenter une forme dont la section est supérieure à la somme de chaque section d'une ouverture disposée en aval, chaque ouverture correspondant à une deuxième portion 310 débouchant sur la deuxième chambre 320 en aval de la section.

Ainsi, typiquement lorsque les premiers portions 210 sont de section croissante, la première chambre 220 peut présenter une forme dont la section est supérieure à la somme des sections maximales de chaque première portion 210 débouchant sur la première chambre 220 en amont de la section.

Il est ainsi possible d'éviter la limitation de l'écoulement du gaz, notamment due à une contrepression entre les portions et les première 220 et deuxième 320 chambres d'un même caisson, et donc de limiter les pertes de charge.

La première chambre 220 et/ou la deuxième chambre 320 peuvent chacune former un réservoir de gaz et/ou de pression. Lorsque la turbine 6 fonctionne de manière saturée, il est ainsi possible de stocker la surpression dans le caisson de surpression 2 et la dépression dans le caisson de dépression 3 afin que la turbine 6 puisse continuer à fonctionner même si la houle et les vagues fournissent moins d'énergie par la suite.

En particulier, la première chambre 220 peut être disposée au-dessus de l'alternance de premières portions 210 et de deuxièmes portions 310.

De même la deuxième chambre 320 peut être disposée au-dessus de l'alternance de premières portions 210 et de deuxièmes portions 310.

Il en résulte une compacité encore supérieure du système.

Il en résulte également un coût moindre de réalisation, car il est possible d'utiliser des parois communes entre les portions d'un caisson 2, respectivement 3, et la deuxième chambre de l'autre caisson 3, respectivement la première chambre de l'autre caisson 2, comme dans les modes de réalisation illustrés aux figures 1 à 6b, dans lesquels les parois supérieures des sections d'un caisson 2, respectivement 3, forment des parties de parois inférieures de l'autre caisson 3, respectivement 2.

De même, une portion de paroi latérale des caissons 2 et 3 peut être commune aux deux caissons 2 et 3. Il peut alors être avantageux de placer une ou plusieurs turbine au niveau de la portion de paroi commune, comme illustré figure 1, et ainsi de réaliser un système encore plus compact et de limiter les pertes associées à des conduits d'acheminement du gaz à la turbine 6.

Alternativement, la première chambre 220 et/ou la deuxième chambre 320 peuvent être disposés de part et d'autre de l'alternance de premières portions 210 et de deuxièmes portions 310.

Lorsque la première chambre 220 et la deuxième chambre 320 sont disposées de part et d'autre de l'alternance de premières portions 210 et de deuxièmes portions 310, il est possible d'obtenir une structure plus basse, et donc plus stable.

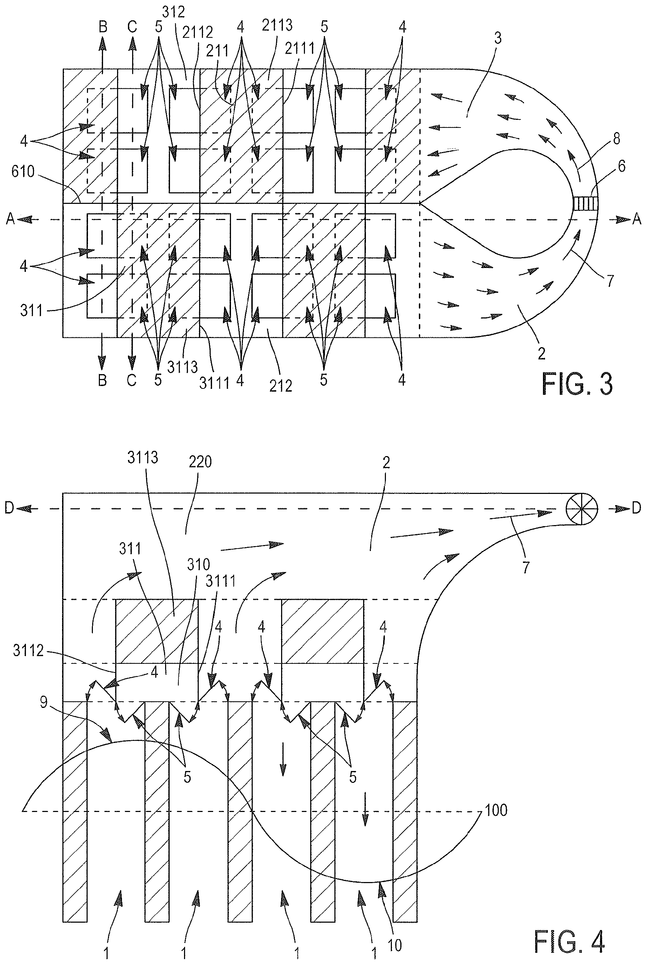

Que la première chambre 220 et la deuxième chambre 320 soient positionnés de part et d'autre ou au-dessus des portions 210 et 310 de caissons 2 et 3, la turbine 6 peut être positionnée entre deux extrémités des bras, comme illustré figure 3.

Quelle que soit la position de la première chambre 220 et de la deuxième chambre 320, il est possible de dimensionner ces chambres des caissons 2 et 3 de sorte à former des goulots d'étranglement au voisinage de la turbine 6 uniquement. Ces goulots d'étranglement permettent d'accélérer l'air au niveau du passage dans la turbine 6 et d'augmenter le rendement en permettant un écoulement régulier de l'air même en cas de faible houle.

Selon un mode de réalisation particulier, chaque première portion 210 comprend deux premières lignes successives et chaque deuxième portion 310 comprend deux deuxièmes lignes successives.

On obtient alors une structure pour laquelle les soupapes sont placées tête-bêche d'une ligne à l'autre, ou d'un alignement à l'autre, comme illustré figure 3.

Ceci permet d'obtenir une structure encore moins coûteuse à réaliser car chaque section comprend deux lignes ou alignements.

Un avantage supplémentaire d'un tel mode de réalisation est d'éviter les pertes liées au déphasage de l'onde de la houle, et même d'en bénéficier, même si l'onde de propagation est parallèle aux lignes ou alignements.

En effet, les soupapes d'un même type étant organisées selon deux lignes successives, ou alignements successifs, de colonnes contiguës, en particulier si l'eau est soumise à une onde se propageant de manière parallèle aux lignes, en particulier aux alignements, les colonnes peuvent être dimensionnées de sorte qu'au moins une des deux lignes, en particulier alignements, présente des soupapes ouvertes. Chaque section a donc une probabilité beaucoup plus importante d'être traversée par un flux de gaz à un instant donné et que les flux de gaz soient répartis plus équitablement entre les différentes portions des caissons 2 et 3.

De plus, l'espace mis à disposition pour le flux de gaz par la section associé à une ligne ou un alignement étant mutualisé entre les lignes ou alignements deux à deux, et les soupapes de chaque ligne ou alignement n'étant pas systématiquement toutes ouvertes au même moment, il est ainsi possible de gagner encore en espace lors de l'écoulement de gaz depuis ou vers chaque soupape anti-retour 4 et/ou 5 et de diminuer encore l'accélération du gaz et les possibilités de saturation du flux de gaz.

**Flotteur interne à une colonne**

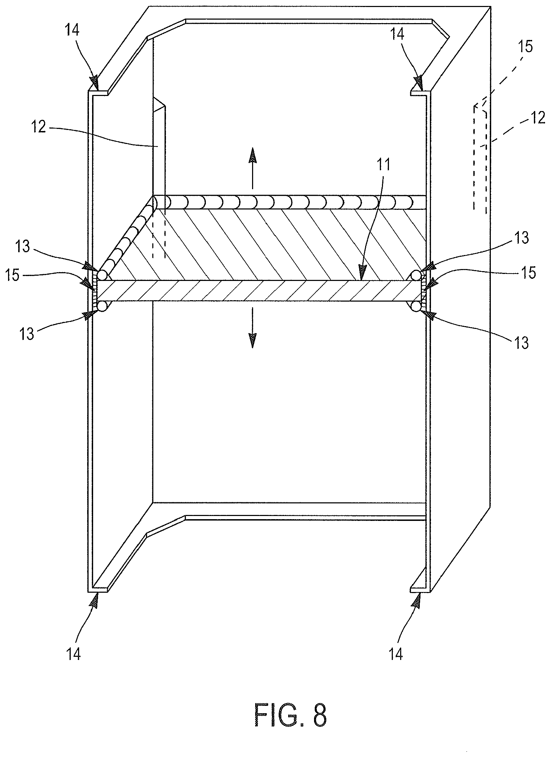

Selon un mode de réalisation particulier, une ou plusieurs colonnes, de manière préférentielle toutes les colonnes, de la structure présent un dispositif flotteur interne 11 à chaque colonne 1. Un tel dispositif comprenant typiquement un flotteur interne 11 est par exemple illustré figure 8.

Le flotteur interne 11 est typiquement dimensionné pour être suffisamment léger pour flotter sur l'eau présente dans la colonne. Ainsi le flotteur interne peut être dimensionné pour se déplacer dans la colonne en étant porté par l'eau dans la colonne au moins entre une position basse à une première hauteur et une position haute à une deuxième hauteur.

Le déplacement du flotteur interne peut être guidé par des moyens de guidage disposés dans la colonne 1. Les moyens de guidage peuvent comprendre un guide.

Les moyens de guidage limitent par exemple le déplacement du flotteur interne entre la position haute et la position basse.

Il est ainsi possible par exemple d'éviter que le flotteur interne ne sorte de la colonne 1.

Alternativement ou en complément, les moyens de guidage permettent par exemple de limiter le mouvement du flotteur interne selon d'autre degrés de liberté, par exemple pour éviter que le flotteur interne ne bascule ou ne tourne et ne vienne à se bloquer le long de la colonne.

Selon un exemple de mode de réalisation, les moyens de guidage comprennent des rails s'étendant le long d'une paroi intérieure de la colonne 1, le flotteur interne présentant des éléments complémentaires de sorte à ce que le flotteur interne se déplace le long des rails.

Les rails peuvent ainsi être conformés de sorte à limiter le déplacement du flotteur interne entre la position haute et la position basse, par exemple au moyen de butées.

Le flotteur interne est par exemple adapté pour aplanir le niveau de l'eau à l'intérieur de la colonne. On évite ainsi des différences de niveau d'eau dans une même colonne, qui ont tendance à provoquer des perturbations du flux dans une même colonne 1 dues entre autres à des phénomènes de résonance dont résulte des pertes de pression. A cet effet, le flotteur interne présente par exemple une forme générale complémentaire à la section intérieure de la colonne 1, avec des dimensions réduites pour présenter un jeu.

Le flotteur interne est par exemple adapté pour empêcher l'eau de pénétrer depuis la colonne dans les soupapes.

Ceci permet d'éviter que de l'eau pénètre dans les caissons 2 et/ou 3, et vienne diminuer la flottabilité du système et/ou le rendement du système.

Par ailleurs, ceci permet d'éviter qu'une force trop importante exercée par l'eau ne vienne endommager les soupapes. En effet, afin d'obtenir une efficacité et une réactivité importante, les soupapes sont dimensionnées de préférence pour réagir avec une sensibilité importante aux pressions exercées par l'air. Or une telle sensibilité implique que des efforts exercés par un liquide tel que l'eau risquent d'endommager de manière importante les soupapes. Lorsque des soupapes sensibles sont installées, il est donc souhaitable de les protéger.

A cet effet, la colonne présente par exemple une zone de butée 14 supérieure complémentaire du flotteur interne au niveau de la deuxième hauteur, s'étendant à partir de la paroi intérieur de la colonne, et dans laquelle le flotteur interne vient s'imbriquer lorsqu'il est déplacé jusqu'à cette structure afin de former une fermeture étanche à cet endroit. Ainsi, lorsque l'eau monte jusqu'à ce que le flotteur interne vienne s'imbriquer dans la zone de butée supérieure, l'eau ne peut plus monter et ne pourra donc ni entrer dans le caisson 2 ou 3, ni endommager les soupapes disposées au-dessus de la zone de butée.

La zone de butée supérieure comprend par exemple un joint étanche contre lequel le flotteur interne vient s'appuyer afin de former une fermeture étanche.

La zone de butée supérieure peut être adaptée pour former un amortisseur et limiter ainsi l'usure du flotteur due à ses butées successives contre la zone de butée. Alternativement ou en complément, un élément amortisseur 13 peut être positionné sur le flotteur 11.

Alternativement ou en complément, le flotteur interne est par exemple adapté pour empêcher l'air de sortir de la colonne par l'ouverture 111.

Ceci permet d'éviter que du gaz ne sorte du système lorsque le niveau de l'eau descend, provoquant une dépression dans la colonne et une aspiration tendant à entraîner le gaz vers l'extérieur du système par l'ouverture 111, en particulier lorsque le niveau des vagues diminue suffisamment pour atteindre l'ouverture 111. Une diminution de la quantité de gaz dans le système diminuerait progressivement le rendement dans le système.

A cet effet, la colonne présente par exemple une zone de butée inférieure complémentaire du flotteur interne au niveau de la première hauteur, s'étendant à partir de la paroi intérieure de la colonne, et dans laquelle le flotteur interne vient s'imbriquer lorsqu'il est déplacé par l'eau dont le niveau s'abaisse jusqu'à cette structure afin de former une fermeture étanche à cet endroit. Ainsi, lorsque l'eau descend dans la colonne jusqu'à ce que le flotteur interne vienne s'imbriquer dans la zone de butée inférieure, le gaz reste dans la colonne au-dessus de la première hauteur, et ne pourra donc pas s'échapper du système.

La zone de butée inférieure comprend par exemple un joint étanche contre lequel le flotteur interne vient s'appuyer afin de former une fermeture étanche au gaz.

La zone de butée inférieure peut être adaptée pour former un amortisseur et limiter ainsi l'usure du flotteur due à ses butées successives contre la zone de butée inférieure. Alternativement ou en complément, un élément amortisseur 13 peut être positionné sur le flotteur 11.

Alternativement, le flotteur interne peut être adapté pour se déplacer dans la colonne, et présenter des moyens de nettoyage 15 des parois latérales de la colonne.

Un problème récurrent pour des systèmes en contact avec l'eau est la formation de biofilms marins. Ces derniers tendent à endommager les parois en contact sur lesquels ils se développent.

De plus, le nettoyage des colonnes 1 peut être complexe à mettre en œuvre et sa mise en œuvre classique nécessiterait d'arrêter le fonctionnement de la colonne 1, voire du système entier, ce qui implique qu'aucune énergie n'est convertie durant cette période.

Le déplacement du flotteur interne 11 avec les mouvements oscillatoires de l'eau dans la colonne 1 peuvent ainsi permettre de nettoyer la colonne et de prévenir la formation des biofilms.

Par ailleurs, ce nettoyage s'effectue de manière continue lorsque le système est en fonctionnement normal, et évite donc d'arrêter le système pour nettoyer les colonnes.

Le flotteur interne peut ainsi comprendre sur sa périphérie des éléments tels que des brosses et/ou des racleurs venant frotter la paroi intérieure des colonnes et arracher les films qui s'y développent.

### Régulateur de pression

Selon un mode de réalisation particulier, le système comprend un dispositif de régulation de pression.

Le dispositif de régulation de pression est adapté pour ajuster la somme de la pression du caisson de surpression 2 et de la pression du caisson de dépression 3 par rapport à la pression atmosphérique.

Le dispositif de régulation de pression est adapté pour ajuster la moyenne de la pression du caisson de surpression 2 et de la pression du caisson de dépression 3 avec la pression atmosphérique.

Le dispositif de régulation de pression comprend par exemple deux pistons disposés dans deux chambres pour comparer des pressions deux à deux.

Le dispositif de régulation de pression comprend par exemple un double piston disposé dans une chambre. Le double piston comprend deux pistons séparant de manière étanche la chambre en trois parties.

Chaque piston est par exemple mobile indépendamment de l'autre piston dans la même chambre dont une partie extrémale et une partie inter-pistons sont connectées fluidiquement chacune à l'un des deux caissons 2 et 3 par des moyens de connexion. Une autre extrémité est connectée fluidiquement à l'extérieur par des moyens de connexion. Les moyens de connexion sont par exemple des conduits.

Le dispositif de régulation peut être agencé de sorte que les trois parties de la chambre présentent respectivement la pression du caisson de dépression 3, du caisson de surpression 2 et la pression atmosphérique.

Ainsi la position et les caractéristiques du déplacement des pistons dépendent de la différence entre ces pressions.

Les pistons peuvent être aptes à actionner des valves en fonction de leur position et de leur déplacement, de sorte à aspirer de l'air extérieur dans le caisson de dépression 3 lorsque la somme des pressions des deux caissons 2 et 3 est inférieure au produit de la pression atmosphérique et d'un coefficient fixé.

De même, les pistons peuvent être aptes à actionner des valves en fonction de leur position, de sorte à de l'air du caisson de surpression 2 s'échapper lorsque la somme des pressions des deux caissons 2 et 3 est supérieure au produit de la pression atmosphérique et d'un coefficient fixé.

### Dispositif d'évacuation de l'eau

Selon un mode de réalisation particulier, le caisson de surpression 2 et/ou le caisson de dépression 3 peut comprendre des moyens d'évacuation d'eau 17, par exemple un dispositif d'évacuation d'eau.

Le dispositif d'évacuation d'eau d'un caisson 2 ou 3 est par exemple disposé au dans une partie basse du caisson 2 ou 3, de sorte à ce que l'eau s'y dirige par gravité. Le dispositif d'évacuation peut être disposé au niveau d'une extrémité du caisson 2 ou 3 proche de la périphérie du système.

Le dispositif d'évacuation d'un caisson 2 ou 3 comprend par exemple un tube connecté à un clapet anti-retour.

Le tube s'étend par exemple à une hauteur inférieure à celle des colonnes 1. De cette manière, lorsque le niveau de l'eau diminue au voisinage d'une extrémité basse du tube, par exemple en raison du passage d'un creux d'une vague à une extrémité basse, le jeu des pressions provoque la sortie de l'eau sans fuite du gaz et donc de pression. Une telle configuration permet par exemple de vider le tube du caisson de dépression 3 où la pression interne basse tend à prévenir la sortie de l'eau du tube.

Le dispositif d'évacuation d'eau est par exemple un système de type vide-vite.

De tels dispositifs sont illustrés par exemple figure 1.

## Déflecteur de houle

Selon un mode de réalisation particulier, le système peut comprendre des moyens de déflection de la houle.

Ces moyens de déflection sont par exemple adaptés pour concentrer la houle vers les ouvertures 111 des colonnes afin d'augmenter les oscillations de l'eau dans les colonnes 1.

Ces moyens de déflection sont par exemple adaptés pour limiter la concentration de la houle dirigée vers les ouvertures 111 des colonnes 1 afin de diminuer les oscillations de l'eau dans les colonnes 1 en cas de mer mouvementée et de protéger ainsi l'intérieur du système, par exemple des soupapes des colonnes 1.

Les moyens de déflection peuvent être fixes, ou mobiles entre aux moins deux position pour permettre de concentrer la houle dirigée vers les ouvertures 111 en cas de mer calme et/ou de limiter la houle dirigée vers les ouvertures 111 en cas de mer forte ou de tempête.

Les moyens de déflection peuvent comprendre au moins un déflecteur.

Les moyens de déflection peuvent comprendre au moins une paroi ou cloison, fixe ou mobile, disposée sur le système, par exemple sur une cloison extérieure du système, pour orienter la houle vers le bas, c'est-à-dire vers les ouvertures 111 des colonnes.

Les moyens de déflection peuvent comprendre au moins une cloison, fixe ou mobile, disposée sous les ouvertures 111 lorsque le système est en fonctionnement normal, pour orienter la houle vers le haut, c'est-à-dire vers les ouvertures 111, et/ou pour limiter l'accès aux ouvertures 111.

L'effet de déflection peut ainsi être modulé lorsque la cloison est mobile en fonction de la position des déflecteurs positionnés sous les ouvertures 111, en particulier en fonction de leur orientation et de leur hauteur vis-à-vis des parties inférieures des colonnes.

Ainsi les cloisons mobiles disposées sous les ouvertures 111 sont par exemple disposées au fond de l'eau, ou reliées au système au moyen de câbles, par exemple de câbles de longueur modulable pour modifier l'effet des cloisons mobiles sur la houle.

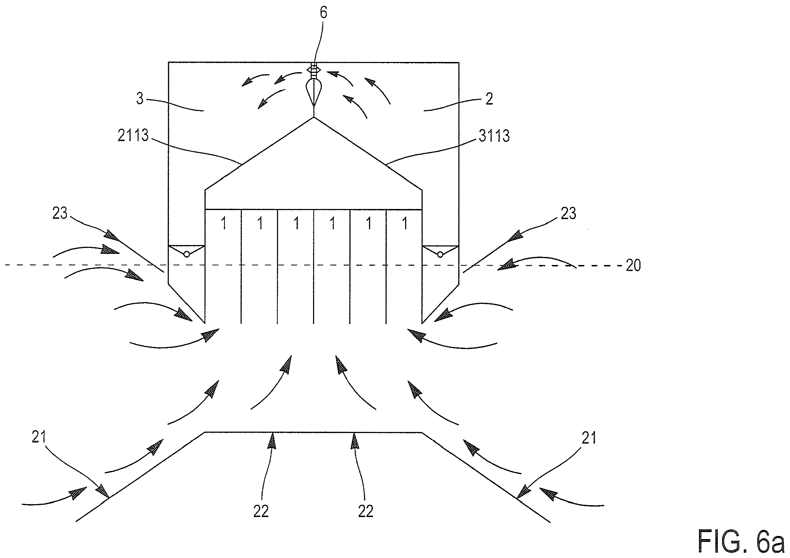

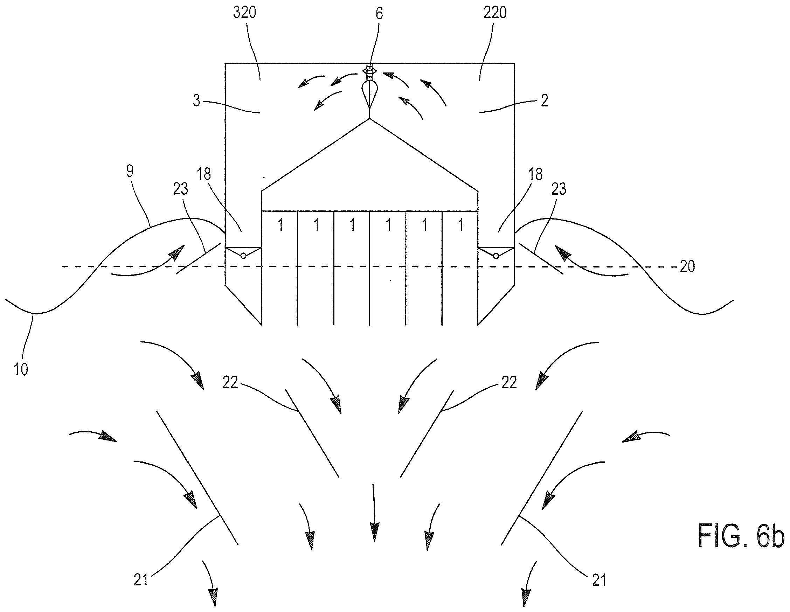

Des exemples de cloisons mobiles sont par exemple fournis figures 6a et 6b.

## Elément de flottaison du système

Le système peut comprendre des moyens de flottaison 16 afin de maintenir le système à un certain niveau dans le volume d'eau.

Ces moyens de flottaison 16 comprennent typiquement des flotteurs.

## Ensemble de conversion d'énergie

Il est également décrit un ensemble de conversion d'énergie issue de la houle.

Un tel ensemble comprend une pluralité de systèmes connectés entre eux. Les systèmes sont par exemple connectés entre eux au niveau d'une partie centrale 1003, ce partie centrale pouvant comprendre des turbines 6 communes aux différents systèmes.

De préférence, les systèmes sont connectés entre eux de sorte à former des angles différents de 180°, de préférence également 90° de sorte à optimiser la conversion d'énergie quelle que soit la direction de propagation de la houle.

Une telle organisation permet également d'éviter les phénomènes de déplacement des systèmes, typiquement du tangage et/ou de roulis des systèmes, sous les effets de la houle et des vagues. Ces phénomènes sont à éviter car ils diminuent le rendement des systèmes. En effet, la houle et les vagues en général peuvent déplacer le système, ce qui diminue alors les oscillations à l'intérieur des colonnes 1 et donc l'énergie qui peut être convertie.

Typiquement une pluralité de systèmes, au moins trois systèmes, sont ainsi connectés entre eux en formant des angles égaux entre eux, par exemple 120°.

## Exemples de mode de réalisation

### Premier exemple de système

En référence aux figures 1 et 2 un système selon un premier exemple de mode de réalisation de l'invention est décrit.

Le système comprend des colonnes 1 organisées de manière contigüe par exemple selon un quadrillage, les colonnes 1 partageant de préférence des parois avec les colonnes contigües. Le quadrillage comprend par exemple quatre lignes de sept colonnes 1 chacune.

Les colonnes 1 sont orientées de préférence verticalement. Les colonnes 1 ont par exemple des sections rectangulaires, typiquement de l'ordre de 0,5 x 0,7 m pour une hauteur de 2,2 m.

Le haut des colonnes (non représenté) est typiquement fermé et muni pour chaque colonne d'une première soupape anti-retour 4 et d'une deuxième soupape anti-retour 5, chaque soupape anti-retour communiquant avec une portion 210 ou 310 du caisson 2 ou 3 correspondant.

Préférentiellement, comme illustré figure 2, chaque première portion 210 de caisson de surpression 2 et chaque deuxième portion 310 de caisson de dépression 3 s'étend partiellement au-dessus de deux lignes adjacentes de colonnes 1, de sorte à ce que les soupapes anti-retour 4 et 5 de même type des colonnes des deux lignes soient connectées à la même portion. Ainsi, deux lignes de premières soupapes anti-retour 4 correspondant à deux lignes de colonnes 1 adjacentes sont par exemple connectées à la même première portion 210.

Il en résulte que les lignes ou alignements de soupapes anti-retour sont prévus tête-bêche entre une ligne ou un alignement de colonnes 1 et la ligne ou l'alignement adjacent.

Le caisson de surpression 2, respectivement le caisson de dépression 3, présentent préférentiellement chacun une première chambre 220, respectivement une deuxième chambre 320, s'étendant au-dessus des premières portions 210 et deuxièmes portions 310.

Les caissons 2 et 3 sont par exemple séparés par une paroi 610. La paroi s'étend par exemple s'étendant orthogonalement au quadrillage de colonnes 1 et est disposée sensiblement au milieu du système.

La paroi 610 est typiquement munie d'au moins une turbine 6 permettant l'écoulement du gaz entre le caisson de surpression 2 et le caisson de dépression 3.

Ainsi, chaque première portion 210 de caisson de surpression 2 comprend une sous-portion distale 211 disposée sous la deuxième chambre 320 du caisson de dépression 3 et une sous-portion proximale 212 disposée sous la première chambre 220 du caisson de surpression 2 et directement connectée à la première chambre 220 du caisson de surpression 2.

De même, chaque deuxième portion 310 de caisson de surpression 3 comprend une sous-portion distale 311 disposée sous la première chambre 220 du caisson de surpression 2 et une sous-portion proximale 312 disposée sous la deuxième chambre 320 du caisson de dépression 3 et directement connectée à la deuxième chambre 320 du caisson de dépression 3.

Ainsi, chaque sous-portion distale 211 du caisson de surpression 2 est séparée des sous-portions proximales 312 adjacentes du caisson de dépression 3, typiquement par des parois latérales 2111 et 2112.

De même, chaque sous-portion distale 311 du caisson de dépression 3 est séparée des sous-portions proximales 212 adjacentes du caisson de surpression 2, typiquement par des parois latérales 3111 et 3112.

De plus, chaque sous-portion distale 211 du caisson de surpression 2, est séparée de la deuxième chambre 320 du caisson de dépression 3, disposé au-dessus, par une paroi supérieure 2113 connectée aux parois latérales 2111 et 2112 de sorte que la sous-portion distale 211 soit isolée hermétiquement du caisson de dépression 3.

De même, chaque sous-portion distale 311 du caisson de dépression est séparée de la première chambre 220 du caisson de surpression 2, disposé au-dessus, par une paroi supérieure 3113 connectée aux parois latérales 3111 et 3112 de sorte que la sous-portion distale 311 soit isolée hermétiquement du caisson de surpression 2.

De préférence, les parois supérieures 2113 et 3113 sont inclinées par rapport à la ligne ou l'alignement des soupapes 4 ou 5, de sorte à former une sous-portion de section croissante ou décroissante et de prendre en compte la sommation ou la soustraction des flux dirigé vers les soupapes 4 ou 5 ou issus des soupapes 4 ou 5, le long des sous-portions.

Les parois entre les colonnes 1 et entre les sous-portions et la première chambre 220 et la deuxième chambre 320 ont typiquement des épaisseurs entre 1 et 3 mm.

Le caisson de surpression 2 et le caisson de dépression 3 peuvent par ailleurs être isolés de l'extérieur par des parois latérales et des parois formant toiture

Les caissons s'étendent également au-delà des colonnes 1, de sorte à prévoir de part et d'autre des colonnes un couloir de maintenance 18 dans chacun des caissons.

### *Deuxième exemple de système*

En référence aux figures 3 à 5b, un système selon un deuxième exemple de mode de réalisation de l'invention est décrit.

L'organisation relative des colonnes 1, des soupapes anti-retour 4 et 5 et des caissons 2 et 3 est similaire à celle du premier exemple.

Les colonnes 1 dans lesquelles le niveau de l'eau est minimal par rapport au niveau moyen 20 car elles sont traversées par le creux 10 de la vague sont soumises à un effort de dépression.

Les colonnes 1 dans lesquelles le niveau de l'eau est maximal par rapport au niveau moyen 20 car elles sont traversées par la crête 10 de la vague sont soumises à un effort de compression.

La répartition des premières soupapes anti-retour 4 en direction et des deuxièmes soupapes anti-retour 5 au-dessus des colonnes 1 est mise en évidence.

Toutefois, la turbine 6 est disposée dans un goulot d'étranglement formé de part et d'autre de la turbine 6 par le caisson de surpression 2 et par le caisson de dépression 3. Ce goulot permet d'accélérer le flux de gaz au niveau de la turbine 6 uniquement afin d'assurer un meilleur rendement. Ce goulot peut être réalisé en prolongement de la première chambre 220 et de la deuxième chambre 320

Les flèches 7 représentent le flux de gaz entrant dans la turbine 6 et les flèches 8 représentent le flux sortant de la turbine 6.

Les soupapes anti-retour 4 et 5 comprennent par exemple des clapets adaptés pour être basculé en fonction du sens de circulation permis par chaque soupape.

Les premières soupapes anti-retour 4 sont par exemple agencées sur les parois latérales 3111 et 3112 des sous-portions distales 311 des deuxièmes portions du caisson de dépression 3, comme illustré figure 4, et/ou sur les parois des colonnes 1.

De même, les deuxièmes soupapes anti-retour 5 sont par exemple agencées sur les parois des colonnes 1, comme illustré figure 4, et/ou sur les parois latérales 2111 et 2112 des sous-portions distales 211 des deuxièmes portions du caisson de dépression 2.

*Troisième exemple de système*

En référence aux figures 6a et 6b, un système selon un troisième exemple de mode de réalisation de l'invention est décrit.

L'organisation relative des colonnes 1, des soupapes anti-retour 4 et 5 et des caissons 2 et 3 est similaire à celle du premier exemple.

Le système peut comprendre des moyens de déflection de la houle. En particulier, le système peut comprendre une ou plusieurs cloisons supérieures latérales 23 disposés par exemple au niveau de la surface 20 de l'eau. Les cloisons supérieures latérales 23 sont disposées de part et d'autre du système.

Le système comprend par exemple en complément ou en alternative des cloisons disposées sous le niveau de l'eau 20.

Ainsi le système comprend par exemple des cloisons inférieures centrales 22 disposées sous le réseau de colonnes 1. Le système comprend par exemple des cloisons inférieures latérales 21 disposées sous les cloisons supérieures latérales 23.

Les cloisons peuvent être fixes. Elles sont alors adaptées à une configuration possible. Préférentiellement, les cloisons sont mobiles pour adapter la déflection de la houle au profil de houle auquel est soumis le volume d'eau à un moment donné.

Lorsque la mer est normale, c'est-à-dire que la hauteur de la houle est adaptée aux dimensions des colonnes 1, en particulier à leur hauteur, pour obtenir un rendement souhaité, toutes les cloisons sont disposées en position neutre, typiquement horizontalement, afin de ne pas modifier la houle.

Lorsque la mer est calme, si la hauteur de houle est trop faible par rapport aux dimensions des colonnes 1, les cloisons peuvent prendre une orientation convergente par rapport à la partie inférieure 110 des colonnes 1. Les cloisons permettent alors une concentration de la houle dans les colonnes 1 et augmente l'amplitude des oscillations de l'eau dans les colonnes. En effet, en eaux calmes, il est nécessaire d'augmenter autant que possible les mouvements de la houle afin d'améliorer le rendement.

Ceci peut par exemple être obtenu avec le système représenté figure 6a. Les cloisons supérieures latérales 23 sont par exemple orientées pour diriger la houle vers le bas. Des parois extérieures du système peuvent présenter une orientation similaire pour accompagner le mouvement de la houle dans la direction fournie par les cloisons supérieures latérales 23.

Les cloisons inférieures latérales 21 sont par exemple orientées de manière symétrique pour diriger la houle vers le haut. Les cloisons inférieures centrales 22 peuvent alors être placées de manière horizontale pour ne pas bloquer le mouvement de la houle.

Lorsque la mer est forte ou lors d'une tempête, si la hauteur de la houle est trop grande par rapport à la hauteur des colonnes 1, les cloisons peuvent prendre une orientation divergente par rapport à la partie inférieure 110 des colonnes 1. Les cloisons permettent alors une dispersion partielle de l'énergie de la houle initialement dirigée vers les colonnes 1 et diminue ainsi l'amplitude des oscillations de l'eau dans les colonnes 1. En effet, en mer forte, il est nécessaire de diminuer les mouvements de la houle afin d'éviter d'endommager le système.

Ceci peut par exemple être obtenu avec le système représenté figure 6b. Les cloisons supérieures latérales 23 sont par exemple orientées pour diriger la houle vers le haut, c'est-à-dire contre les parois du système et non pas sous les parois.

Les cloisons inférieures latérales 21 sont par exemple orientées de manière symétrique par rapport au niveau de flottaison 20, en s'approchant d'une direction verticale pour diriger la houle vers le bas. Les cloisons inférieures centrales 22 peuvent alors être placées de manière similaire pour diriger la houle vers le bas.

*Quatrième exemple de système*

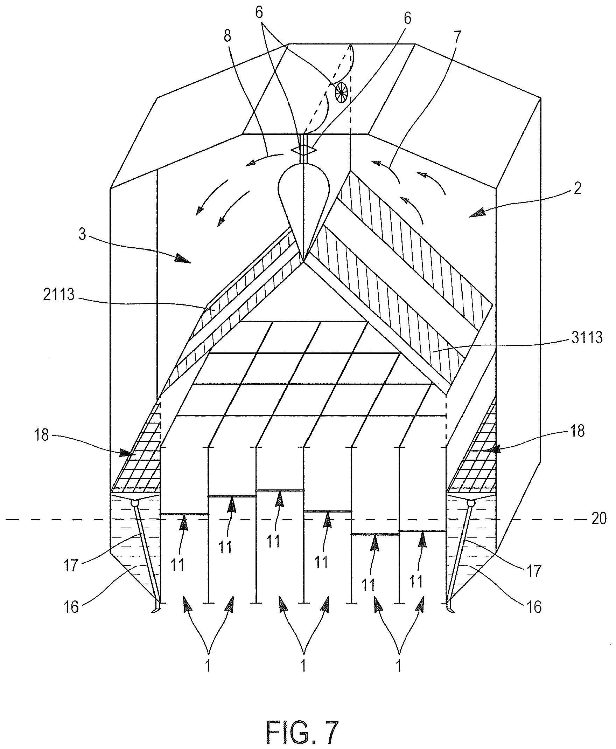

En référence à la figure 7, un système selon un quatrième exemple de mode de réalisation de l'invention est décrit.

L'organisation relative des colonnes 1, des soupapes anti-retour 4 et 5 et des caissons 2 et 3 est similaire à celle du troisième exemple.

Les caissons 2 et 3 s'étendent préférentiellement au-delà des colonnes 1, de sorte à prévoir de part et d'autre des colonnes un couloir de maintenance 18 dans chacun des caissons 2 et 3. Ce couloir de maintenance permet par exemple à une personne d'entrer dans les caissons 2 et/ou 3 pour effectuer des réparations, un nettoyage ou toute sorte d'entretien.

Le système peut comprendre un ou plusieurs éléments de flottaison 16 afin d'améliorer ses capacités de flottaison.

Ces éléments de flottaison 16 sont par exemple disposés de part et d'autre du système, par exemple dans une partie basse du système, par exemple en dessous des couloirs de maintenance 18.

Par ailleurs, le système peut comprendre des moyens d'évacuation d'eau 17 des caissons 2 et/ou 3. Les moyens d'évacuation d'eau 17 peuvent comprendre un dispositif d'évacuation d'eau tel qu'un vide-vite.

Le dispositif d'évacuation d'eau 17 peut être disposé au niveau du couloir de maintenance 18, par exemple sous la forme d'une évacuation d'eau disposée dans le couloir de maintenance 18. Le dispositif d'évacuation d'eau 17 peut comprendre un élément tubulaire, qui traverse par exemple l'élément de flottaison 16.

De plus, le système peut comprendre une pluralité de turbine 6.

De préférence, la paroi au voisinage de la turbine 6 présente une forme adaptée pour diriger les flux de gaz vers la turbine 6.

*Exemple de dispositif flotteur interne à une colonne*

En référence à la figure 8, il est décrit une colonne 1 d'un système selon l'invention, comprenant un dispositif flotteur interne 11 à la colonne 1.

Le flotteur interne 11 présente une forme adaptée pour se déplacer le long de la colonne 1.

Le flotteur interne 11 comprend typiquement une membrane ou paroi adaptée pour couvrir la majeure partie de la surface de l'eau dans la colonne 1, de sorte à aplanir cette surface.

Par ailleurs, la forme du flotteur interne 11 est typiquement adaptée pour fermer hermétiquement la colonne 1 lorsque le flotteur vient rencontrer une zone de butée 14 supérieure ou inférieure.

Le flotteur interne 11 comprend par exemple au moins un élément amortisseur 13 pour limiter le choc lors de la rencontre avec l'une des zones de butée 14. Cet élément amortisseur prend par exemple la forme d'un plot dépassant du flotteur interne 11 au niveau de sa périphérie.

Le déplacement du flotteur est typiquement limité par des moyens de guidage 12, typiquement des rails 12 le long desquels le flotteur 11 se déplace.

Le flotteur peut comprendre, au niveau de rebords, des moyens de nettoyage 15 des parois latérales de la colonne 1. Ces moyens comprennent typiquement des brosses 15. Les rails 12 peuvent également présenter des brosses 15 qui sont actionnées au passage du flotteur.

La colonne 1 est typiquement cylindrique de section rectangulaire.

*Exemple d'ensemble de conversion d'énergie*

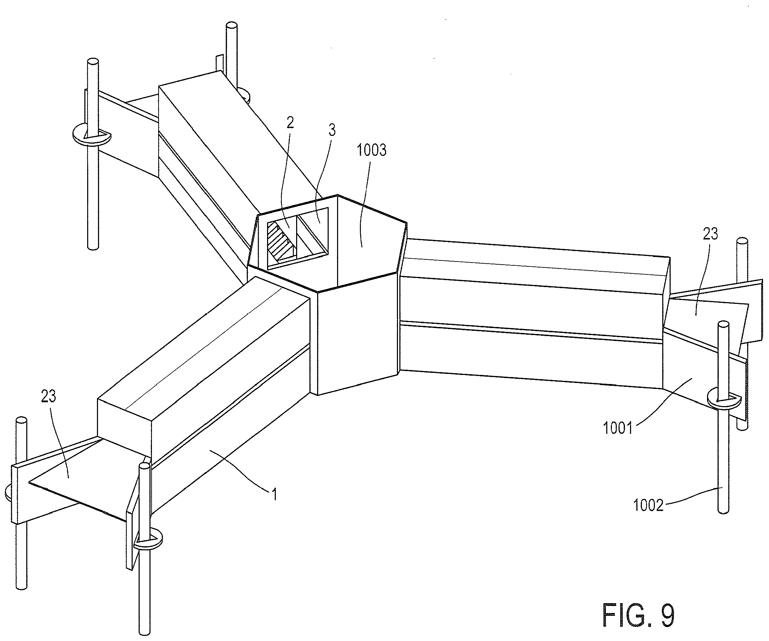

En référence à la figure 9, il est décrit un ensemble de conversion d'énergie issue de la houle ou des vagues.

L'ensemble comprend une pluralité de systèmes selon l'invention connectés entre eux. Par exemple, l'ensemble comprend trois systèmes connectés entre eux à une de leurs extrémités par une partie centrale 1003.

L'autre extrémité peut présenter des cloisons de déflection de la houle 23 et 1001.

L'ensemble peut flotter, et être limité dans ses déplacement au moyens de guides 1002, typiquement des poteaux.

La partie centrale 1003 peut contenir des turbines 6 communes aux différents systèmes.

*Exemple numérique*

Soit un système selon l'invention dont les colonnes 1 ont une section cumulée de 1000 m², placé à l'extérieur des digues de Saint Jean de Luz et soumis à la houle hivernale.

Cette houle présente une hauteur H de houle de 2 m et une période T de 7s.

Soit $H_a$ la hauteur moyenne de houle après amortissement par le système, avec un amortissement surévalué à 30%.

$$H_a = 1,4 \ m$$

Soit $dP_{max}$ la différence de pression entre la surpression maximale et la dépression maximale au niveau des OWC.

$$dP_{max} = 2 \ . \ dP_{Ha} = 28\ 000 \ Pa$$

Soit $dP_u$ la variation de pression utile pour tenir compte des pertes de charge aérodynamiques.

$$dP_u = dP_{max} - 10\% = 25200 \ Pa$$

Soit $V_{max}$ la vitesse maximale de l'air avec une masse volumique de l'air p de 1,20 kg/m³ à 15°humide.

$$V_{max} = (2.dP_u/\rho)^{1/2} = 205 \ m/s$$

Soit $D_{max}$ le débit maximum.

$$D_{max} = H_a.S/T = 285 \ m3/s$$

Soit V la vitesse maximale de l'air dans la turbine avec une section pratique de turbine S de 1,4 m²,

$$V = D_{max}/S = 203 \ m/s$$

On a donc bien V < Vmax.

En utilisant la formule de Betz, on en déduit la puissance maximale théorique :

$$P_{max} = \frac{1}{2}.\rho.S.V^3 = 7\ 026\ 958 \ W$$

Dans certaines zones, en observant les données météo disponibles, on constate que ces conditions sont réunies plus de 95 % du temps soit plus de 8300 heures par an.

Il en résulte une production potentielle théorique maximale d'environ 58000 MWH/an (soit 58 GWH) pour 1000 m² de capteurs.

Avec un tel rendement théorique, il faudrait environ 9 km² de surface de colonnes pour fournir 520 TWH annuels, à savoir la consommation électrique totale actuelle de la France.

En considérant un rendement pratique de 25% il faudrait donc 36 km² de surface, soit 3600 systèmes ou ensembles selon l'invention de 10 000 m² au total, répartis par exemple en 36 parcs de 100 systèmes ou ensembles.

**Revendications**

1. Système de conversion d'énergie issue de la houle ou des vagues, comprenant un réseau de colonnes (1) de compression d'eau, chaque colonne (1) présentant :

   - une extrémité inférieure (110) adaptée pour être plongée dans un volume d'eau subissant l'action de la houle, l'extrémité inférieure (110) présentant une ouverture (111) pour accueillir l'eau du volume d'eau dans la colonne (1), de sorte à former une chambre comprenant un gaz dans une partie supérieure (120) de la colonne (1),
   - une première soupape anti-retour (4) en communication fluidique depuis ladite colonne (1) vers un caisson de surpression (2) commun aux colonnes (1) du réseau,
   - une deuxième soupape anti-retour (5) en communication fluidique depuis un caisson de dépression (3) commun aux colonnes (1) du réseau vers ladite colonne (1),
   dans lequel le caisson de surpression (2) et le caisson de dépression (3) sont connectés fluidiquement par une turbine (6),
   dans lequel les colonnes (1) du réseau sont disposées de manière contiguë, et en ce que le réseau s'étend selon au moins deux directions non parallèles où
   les premières soupapes anti-retour (4) des colonnes (1) du système sont disposées selon des premières lignes, et les deuxièmes soupapes anti-retour (5) des colonnes (1) du système sont disposées selon des deuxièmes lignes, dans lequel chaque première ligne est disposée au niveau d'une première portion (210) du caisson de surpression (2) et chaque deuxième ligne est disposée au niveau d'une deuxième portion (310) du caisson de dépression (3), les premières portions (210) et deuxièmes portions (310) étant disposées en alternance au-dessus des colonnes (1), **caractérisé en ce que** chaque première portion (210), respectivement deuxième portion (310), a une section croissante, respectivement décroissante, dans le sens d'écoulement du gaz.

2. Système selon la revendication 1, dans lequel les lignes sont des alignements rectilignes parallèles entre eux.

3. Système selon la revendication 1 ou 2, dans lequel les soupapes (4, 5) forment une alternance de premières lignes et de deuxièmes lignes au-dessus des colonnes (1).

4. Système selon l'une quelconque des revendications 1 à 3, dans lequel les premières portions (210) sont chacune connectées à une même première chambre (220) du caisson de surpression (2) disposée entre chaque première portion (210) et la turbine (6), et les deuxièmes portions (310) sont chacune connectées à une même deuxième chambre (320) du caisson de dépression (2) disposée entre chaque deuxième portion (310) et la turbine (6),

   la première chambre (220) et la deuxième chambre (320) étant de préférence disposées au-dessus de l'alternance de premières portions (210) et de deuxièmes portions (310, ou
   dans lequel la première chambre (220) et la deuxième chambre (320) étant de préférence disposées de part et d'autre de l'alternance de premières portions (210) et de deuxièmes portions (310).

5. Système selon la revendication 4, dans lequel la première chambre (220), respectivement deuxième chambre (320), a une section croissante, respectivement décroissante, dans le sens d'écoulement du gaz.

6. Système selon la revendication 5, dans lequel

   - la première chambre (220) présente une forme dont la section est supérieure à la somme de chaque section d'une ouverture disposée en amont, chaque ouverture correspondant à une première portion (210) débouchant sur la première chambre (220) en amont de la section, et/ou
   - la deuxième chambre (320) présente une forme dont la section est supérieure à la somme de chaque section d'une ouverture disposée en aval, chaque ouverture correspondant à une deuxième portion (310) débouchant sur la deuxième chambre (320) en aval de la section.

7. Système selon la revendication 5 ou 6, dans lequel :

   - chaque première portion (210) de caisson de surpression (2) comprend une sous-portion distale (211) disposée sous la deuxième chambre (320) du caisson de dépression (3) et une sous-portion proximale (212) disposée sous la première chambre (220) du caisson de surpression (2) et directement connectée à la première chambre (220) du caisson de surpression (2),
   - chaque deuxième portion (310) de caisson de surpression (3) comprend une sous-portion distale (311) disposée sous la première chambre (220) du caisson de surpression (2) et une sous-portion proximale (312) disposée sous la deuxième chambre (320) du caisson de dépression (3) et directement connectée à la deuxième chambre (320) du caisson de dépression (3),

- chaque sous-portion distale (211) du caisson de surpression (2) étant séparée des sous-portions proximales (312) adjacentes du caisson de dépression (3) par des parois latérales (2111, 2112),

- chaque sous-portion distale (311) du caisson de dépression (3) est séparée des sous-portions proximales (212) adjacentes du caisson de surpression (2) par des parois latérales (3111, 3112),

- chaque sous-portion distale (211) du caisson de surpression (2), est séparée de la deuxième chambre (320) du caisson de dépression (3), disposé au-dessus, par une paroi supérieure (2113) connectée aux parois latérales (2111, 2112) de sorte que la sous-portion distale (211) soit isolée hermétiquement du caisson de dépression (3),

- chaque sous-portion distale (311) du caisson de dépression est séparée de la première chambre (220) du caisson de surpression (2), disposé au-dessus, par une paroi supérieure (3113) connectée aux parois latérales (3111, 3112) de sorte que la sous-portion distale (311) soit isolée hermétiquement du caisson de surpression (2).

8. Système selon l'une quelconque des revendications 1 à 7, dans lequel chaque première portion (210) comprend deux premières lignes successives et chaque deuxième portion (310) comprend deux deuxièmes lignes successives.

9. Système selon l'une quelconque des revendications 1 à 8, dans lequel le premier caisson (2) et le deuxième caisson (3) sont entrelacés au-dessus des colonnes (1) de sorte que les premières et deuxièmes portions (210, 310) sont disposées en alternance au-dessus des colonnes.

10. Système selon l'une quelconque des revendications 1 à 9, dans lequel :

- le premier caisson comprend une partie ayant une forme générale de peigne comprenant des dents et un manche, les premières portions formant les dents du peigne et la première chambre formant le manche du peigne, et le deuxième caisson comprend une partie ayant une forme générale de peigne comprenant des dents et un manche, les deuxièmes portions formant les dents du peigne et la deuxième chambre formant le manche du peigne, de sorte que le peigne du premier caisson et le peigne du deuxième caisson sont insérés l'un dans l'autre au niveau de leurs dents.

11. Système selon l'une quelconque des revendications 1 à 10, dans lequel chaque colonne (1) comprend un dispositif flotteur interne (11) adapté pour empêcher l'eau de pénétrer depuis la colonne (1) dans les soupapes (4, 5), et/ou

dans lequel chaque colonne (1) comprend un dispositif flotteur interne (11) adapté pour empêcher l'air de sortir de la colonne (1) par l'ouverture (111), et/ou

dans lequel chaque colonne (1) comprend un dispositif flotteur interne (11, 15) adapté pour se déplacer dans la colonne (1), le dispositif flotteur interne (11) présentant des moyens de nettoyage (15) des parois latérales de la colonne (1).

12. Système selon l'une quelconque des revendications 1 à 11, comprenant un dispositif de régulation de pression, adapté pour ajuster la moyenne de la pression du caisson de surpression (2) et de la pression du caisson de dépression (3) par rapport à la pression atmosphérique.

13. Système selon l'une quelconque des revendications 1 à 12, dans lequel :

- le caisson de surpression (2) et/ou le caisson de dépression (3) comprend un dispositif d'évacuation d'eau (17), et/ou

- le système comprend en outre des moyens de déflection (21, 22, 23) de la houle par rapport aux ouvertures (111) des colonnes (1), les moyens de déflection comprenant de préférence des cloisons mobiles (21, 22, 23) disposées de part et d'autre, et/ou au-dessous des colonnes (1).

14. Ensemble de conversion d'énergie issue de la houle et/ou des vagues comprenant une pluralité de systèmes selon l'une quelconque des revendications 1 à 13, les systèmes étant connectés entre eux.

15. Utilisation d'un système selon l'une des revendications 1 à 13, dans laquelle :

- les extrémités inférieures (110) sont plongées dans un volume d'eau subissant l'action de la houle,

- chaque ouverture (111) accueille l'eau du volume d'eau dans la colonne (1) de sorte à former une chambre comprenant un gaz dans la partie supérieure (120) de la colonne (1), la partie supérieure (120) délimitant avec le niveau de l'eau à l'intérieur de la colonne (1) un espace dans lequel le gaz peut être comprimé,

- l'eau dans chaque colonne (1) subit l'action de la houle qui s'applique au volume d'eau,

- le volume de chaque chambre augmente et diminue alternativement, toutes les colonnes (1) n'ayant pas en même temps le même niveau d'eau, de sorte à obtenir dans le caisson de surpression (2) une surpression relativement au caisson de dépression (3),

- la différence de pression entre les caissons (2,3) provoque un mouvement du gaz du caisson de surpression (2) vers le caisson de dépression (3) par la connexion fluidique, de sorte à mettre la turbine (6) en mouvement.

**Patentansprüche**

1. System zur Umwandlung von Energie aus Wellen oder Wogen, das ein Netzwerk von Wasserverdichtungssäulen (1) umfasst, wobei jede Säule (1) Folgendes aufweist:

   - ein unteres Ende (110), das so beschaffen ist, dass es in ein Wasservolumen eingetaucht werden kann, das der Wirkung der Brandung ausgesetzt ist, wobei das untere Ende (110) eine Öffnung (111) aufweist, um Wasser aus dem Wasservolumen in die Säule (1) aufzunehmen, so dass in einem oberen Teil (120) der Säule (1) eine Kammer gebildet wird, die ein Gas enthält,

   - ein erstes Rückschlagventil (4), das in Fluidverbindung von der Säule (1) zu einem den Säulen (1) des Netzes gemeinsamen Überdruckkastens (2) steht,

   - ein zweites Rückschlagventil (5) in Fluidverbindung von einem Unterdruckkasten (3), der den Säulen (1) des Netzes gemeinsam ist, zu der Säule (1),

   wobei der Überdruckkasten (2) und der Unterdruckkasten (3) durch eine Turbine (6) fluidisch verbunden sind,

   bei dem die Säulen (1) des Netzes aneinandergrenzend angeordnet sind, und dass sich das Netz in mindestens zwei nicht parallelen Richtungen erstreckt

   wobei die ersten Rückschlagventile (4) der Säulen (1) des Systems in ersten Reihen angeordnet sind, und die zweiten Rückschlagventile (5) der Säulen (1) des Systems in zweiten Reihen angeordnet sind, wobei jede erste Reihe an einem ersten Abschnitt (210) des Überdruckkastens (2) angeordnet ist, und jede zweite Reihe an einem zweiten Abschnitt (310) des Unterdruckkastens (3) angeordnet ist, wobei die ersten Abschnitte (210) und die zweiten Abschnitte (310) abwechselnd über den Säulen (1) angeordnet sind, **dadurch gekennzeichnet, dass** jeder erste Abschnitt (210) bzw. jeder zweite Abschnitt (310) einen zunehmenden bzw. abnehmenden Querschnitt in der Strömungsrichtung des Gases aufweist.

2. System nach Anspruch 1, wobei die Linien geradlinige Ausrichtungen sind, die parallel zueinander verlaufen.

3. System nach Anspruch 1 oder 2, bei dem die Ventile (4, 5) abwechselnd erste und zweite Reihen über den Säulen (1) bilden.

4. System nach einem der Ansprüche 1 bis 3, wobei die ersten Abschnitte (210) jeweils mit einer gleichen ersten Kammer (220) des Überdruckkastens (2) verbunden sind, die zwischen jedem ersten Abschnitt (210) und der Turbine (6) angeordnet ist, und die zweiten Abschnitte (310) jeweils mit einer gleichen zweiten Kammer (320) des Unterdruckkastens (2) verbunden sind, die zwischen jedem zweiten Abschnitt (310) und der Turbine (6) angeordnet ist,

   wobei die erste Kammer (220) und die zweite Kammer (320) vorzugsweise über der Abfolge von ersten Abschnitten (210) und zweiten Abschnitten (310) angeordnet sind, oder

   wobei die erste Kammer (220) und die zweite Kammer (320) vorzugsweise auf beiden Seiten der abwechselnden ersten Abschnitte (210) und zweiten Abschnitte (310) angeordnet sind.

5. System nach Anspruch 4, wobei die erste Kammer (220) bzw. zweite Kammer (320) in Strömungsrichtung des Gases einen zunehmenden bzw. abnehmenden Querschnitt aufweist.

6. System nach Anspruch 5, wobei

   - die erste Kammer (220) eine Form aufweist, deren Querschnitt größer ist als die Summe jedes Querschnitts einer stromaufwärts angeordneten Öffnung, wobei jede Öffnung einem ersten Abschnitt (210) entspricht, der stromaufwärts des Querschnitts in die erste Kammer (220) mündet, und/oder

   - die zweite Kammer (320) eine Form aufweist, deren Querschnitt größer ist als die Summe jedes Querschnitts einer stromabwärts angeordneten Öffnung, wobei jede Öffnung einem zweiten Abschnitt (310) entspricht, der stromabwärts des Abschnitts in die zweite Kammer (320) mündet.

7. System nach Anspruch 5 oder 6, wobei :

- jeder erste Abschnitt (210) des Überdruckkastens (2) einen distalen Unterabschnitt (211), der unter der zweiten Kammer (320) des Unterdruckkastens (3) angeordnet ist, und einen proximalen Unterabschnitt (212), der unter der ersten Kammer (220) des Überdruckkastens (2) angeordnet ist und direkt mit der ersten Kammer (220) des Überdruckkastens (2) verbunden ist, umfasst,

- jeder zweite Abschnitt (310) des Unterdruckkastens (3) einen distalen Unterabschnitt (311), der unter der ersten Kammer (220) des Überdruckkastens (2) angeordnet ist, und einen proximalen Unterabschnitt (312), der unter der zweiten Kammer (320) des Unterdruckkastens (3) angeordnet ist und direkt mit der zweiten Kammer (320) des Unterdruckkastens (3) verbunden ist, umfasst,

- wobei jeder distale Unterabschnitt (211) des Überdruckkastens (2) von benachbarten proximalen Unterabschnitten (312) des Unterdruckkastens (3) durch Seitenwände (2111, 2112) getrennt ist,

- jeder distale Unterabschnitt (311) des Unterdruckkastens (3) von benachbarten proximalen Unterabschnitten (212) des Überdruckkastens (2) durch Seitenwände (3111, 3112) getrennt ist,

- jeder distale Unterabschnitt (211) des Überdruckkastens (2) von der zweiten Kammer (320) des darüber angeordneten Unterdruckkastens (3) durch eine obere Wand (2113), die mit den Seitenwänden (2111, 2112) verbunden ist, getrennt ist, so dass der distale Unterabschnitt (211) hermetisch von dem Unterdruckkasten (3) isoliert ist,

- jeder distale Unterabschnitt (311) des Unterdruckkastens von der ersten Kammer (220) des darüber angeordneten Überdruckkastens (2) durch eine obere Wand (3113) getrennt ist, die mit den Seitenwänden (3111, 3112) verbunden ist, so dass der distale Unterabschnitt (311) hermetisch von dem Überdruckkasten (2) isoliert ist.

8. System nach einem der Ansprüche 1 bis 7, wobei jeder erste Abschnitt (210) zwei aufeinanderfolgende erste Linien umfasst und jeder zweite Abschnitt (310) zwei aufeinanderfolgende zweite Linien umfasst.

9. System nach einem der Ansprüche 1 bis 8, bei dem der erste Kasten (2) und der zweite Kasten (3) über den Säulen (1) miteinander verflochten sind, so dass die ersten und zweiten Abschnitte (210, 310) abwechselnd über den Säulen angeordnet sind.

10. System nach einem der Ansprüche 1 bis 9, wobei :

- der erste Kasten einen Teil mit der allgemeinen Form eines Kamms umfasst, der Zähne und einen Griff umfasst, wobei die ersten Abschnitte die Zähne des Kamms bilden und die erste Kammer den Griff des Kamms bildet, und der zweite Kasten einen Teil mit der allgemeinen Form eines Kamms umfasst, der Zähne und einen Griff umfasst, wobei die zweiten Abschnitte die Zähne des Kamms bilden und die zweite Kammer den Griff des Kamms bildet,

so dass der Kamm des ersten Kastens und der Kamm des zweiten Kastens an ihren Zähnen ineinander geschoben werden.

11. System nach einem der Ansprüche 1 bis 10, wobei jede Säule (1) eine interne Schwimmervorrichtung (11) umfasst, die so beschaffen ist, dass sie verhindert, dass Wasser von der Säule (1) in die Ventile (4, 5) eindringt, und/oder wobei jede Säule (1) eine innere Schwimmervorrichtung (11) umfasst, die so beschaffen ist, dass sie verhindert, dass Luft aus der Säule (1) durch die Öffnung (111) austritt, und/oder wobei jede Säule (1) eine innere Schwimmervorrichtung (11, 15) umfasst, die dazu geeignet ist, sich in der Säule (1) zu bewegen, wobei die innere Schwimmervorrichtung (11) eine Einrichtung (15) zum Reinigen der Seitenwände der Säule (1) aufweist.

12. System nach einem der Ansprüche 1 bis 11, umfassend eine Druckregelungsvorrichtung, die dazu geeignet ist, den Mittelwert des Drucks des Überdruckkastens (2) und des Drucks des Unterdruckkastens (3) in Bezug auf den atmosphärischen Druck einzustellen.

13. System nach einem der Ansprüche 1 bis 12, wobei :

- der Überdruckkasten (2) und/oder der Unterdruckkasten (3) einen Wasserabfluss (17) umfasst, und/oder
- das System außerdem Mittel (21, 22, 23) zur Ablenkung des Seegangs in Bezug auf die Öffnungen (111) der Säulen (1) umfasst, wobei die Ablenkungsmittel vorzugsweise bewegliche Trennwände (21, 22, 23) umfassen, die auf beiden Seiten und/oder unterhalb der Säulen (1) angeordnet sind.

14. Anordnung zur Umwandlung von Energie aus Wellen und/oder Dünung, die eine Vielzahl von Systemen nach einem der Ansprüche 1 bis 13 umfasst, wobei die Systeme miteinander verbunden sind.

15. Verwendung eines Systems nach einem der Ansprüche 1 bis 13, wobei :

- die unteren Enden (110) in ein Wasservolumen eingetaucht sind, das der Wirkung des Wellengangs unterliegt,

- jede Öffnung (111) das Wasser aus dem Wasservolumen in die Säule (1) aufnimmt, so dass eine Kammer mit einem Gas im oberen Teil (120) der Säule (1) gebildet wird, wobei der obere Teil (120) mit dem Wasserspiegel innerhalb der Säule (1) einen Raum abgrenzt, in dem das Gas komprimiert werden kann,

- das Wasser in jeder Säule (1) unterliegt der Wirkung des Wellengangs, der auf das Wasservolumen angewendet wird,

- das Volumen jeder Kammer abwechselnd zunimmt und abnimmt, wobei nicht alle Säulen (1) gleichzeitig den gleichen Wasserstand haben, so dass in dem Überdruckkasten (2) ein Überdruck relativ zum Unterdruckkasten (3) erreicht wird,

- die Druckdifferenz zwischen den Kästen (2, 3) eine Bewegung des Gases vom Überdruckkasten (2) zum Unterdruckkasten (3) durch die Fluidverbindung bewirkt, so dass die Turbine (6) in Bewegung gesetzt wird.

## Claims

1. A swell or wave energy conversion system comprising an array of water compression columns (1), each column (1) having:

   - a lower end (110) adapted to be immersed in a volume of water under the action of the swell, the lower end (110) having an opening (111) for receiving water from the volume of water in the column (1), so as to form a chamber comprising a gas in an upper part (120) of the column (1),
   - a first check valve (4) in fluid communication from said column (1) to an hyperbaric chamber (2) common to the columns (1) of the array,
   - a second check valve (5) in fluid communication from an hypobaric chamber (3) common to the columns (1) of the array to said column (1), in which the hyperbaric chamber (2) and the hypobaric chamber (3) are fluidly connected by a turbine (6),

   in which the columns (1) of the array are arranged contiguously, and in that the array extends in at least two non-parallel directions where the first check valves (4) of the columns (1) of the system are arranged in first rows, and the second check valves (5) of the columns (1) of the system are arranged in second rows, wherein each first row is arranged at a first portion (210) of the hyperbaric chamber (2) and each second row is arranged at a second portion (310) of the hypobaric chamber (3), the first portions (210) and second portions (310) being arranged alternately above the columns (1), **characterised in that** each first portion (210), respectively second portion (310), has an increasing, respectively decreasing, cross-section in the direction of gas flow .

2. The system according to claim 1, wherein the rows are straight alignments parallel to each other.

3. The system according to claim 1 or 2, wherein the valves (4, 5) form alternating first and second rows above the columns (1).

4. The system according to any one of claims 1 to 3, wherein the first portions (210) are each connected to a same first chamber (220) of the hyperbaric chamber (2) disposed between each first portion (210) and the turbine (6), and the second portions (310) are each connected to a same second chamber (320) of the hyperbaric chamber (2) disposed between each second portion (310) and the turbine (6),

   the first chamber (220) and the second chamber (320) being preferably arranged above the alternating first portions (210) and second portions (310, or

   wherein the first chamber (220) and the second chamber (320) are preferably arranged on either side of alternating first portions (210) and second portions (310).

5. The system according to claim 4, wherein the first chamber (220), respectively second chamber (320), has an increasing, respectively decreasing, cross-section in the direction of gas flow.

6. The system according to claim 5, wherein

   - the first chamber (220) has a shape with a cross-section greater than the sum of each cross-section of an upstream opening, each opening corresponding to a first portion (210) opening into the first chamber (220) upstream of the cross-section, and/or
   - the second chamber (320) has a shape with a cross-section greater than the sum of each cross-section of a downstream opening, each opening corresponding to a second portion (310) opening into the second chamber (320) downstream of the cross-section.

7. A system according to claim 5 or 6, wherein:

   - each first portion (210) of the hyperbaric chamber (2) comprises a distal sub-portion (211) disposed below the second chamber (320) of the hypobaric chamber (3) and a proximal sub-portion (212) disposed below the first chamber (220) of the hyperbaric chamber (2) and directly connected to the first chamber (220) of the hyperbaric chamber (2),

- each second portion (310) of the hypobaric chamber (3) comprises a distal sub-portion (311) disposed below the first chamber (220) of the hyperbaric chamber (2) and a proximal sub-portion (312) disposed below the second chamber (320) of the hypobaric chamber (3) and directly connected to the second chamber (320) of the hypobaric chamber (3),

- each distal sub-portion (211) of the hyperbaric chamber (2) being separated from adjacent proximal sub-portions (312) of the hypobaric chamber (3) by side walls (2111, 2112),

- each distal sub-portion (311) of the hypobaric chamber (3) is separated from adjacent proximal sub-portions (212) of the hyperbaric chamber (2) by side walls (3111, 3112),

- each distal sub-portion (211) of the hyperbaric chamber (2) is separated from the second chamber (320) of the hypobaric chamber (3), which is arranged above it, by a top wall (2113) connected to the side walls (2111, 2112) so that the distal sub-portion (211) is hermetically sealed from the hypobaric chamber (3),

- each distal sub-portion (311) of the vacuum box is separated from the first chamber (220) of the hyperbaric chamber (2), arranged above it, by a top wall (3113) connected to the side walls (3111, 3112) so that the distal sub-portion (311) is hermetically sealed from the hyperbaric chamber (2)

8. The system according to any one of claims 1 to 7, wherein each first portion (210) comprises two successive first rows and each second portion (310) comprises two successive second rows.

9. The system according to any one of claims 1 to 8, wherein the hyperbaric chamber (2) and the hypobaric chamber (3) are interleaved above the columns (1) so that the first and second portions (210, 310) are arranged alternately above the columns.

10. The system according to any one of claims 1 to 9, wherein :

- the first chamber comprises a generally comb-shaped part comprising teeth and a handle, the first portions forming the comb teeth and the first chamber forming the comb handle, and the second chamber comprises a generally comb-shaped part comprising teeth and a handle, the second portions forming the comb teeth and the second chamber forming the comb handle,

so that the comb of the first chamber and the comb of the second chamber are inserted into each other at their teeth.

11. The system according to any one of claims 1 to 10, wherein each column (1) comprises an internal float device (11) adapted to prevent water from entering from the column (1) into the valves (4, 5), and/or

wherein each column (1) comprises an internal float device (11) adapted to prevent air from exiting the column (1) through the opening (111), and/or

wherein each column (1) comprises an internal float device (11, 15) adapted to move within the column (1), the internal float device (11) having means (15) for cleaning the side walls of the column (1).

12. The system according to any one of claims 1 to 11, comprising a pressure regulating device, adapted to adjust the average of the pressure of the hyperbaric chamber (2) and the pressure of the hypobaric chamber (3) relative to atmospheric pressure.

13. The system according to any one of claims 1 to 12, wherein :

- the hyperbaric chamber (2) and/or the hypobaric chamber (3) comprises a water discharge device (17), and/or

- the system further comprises means for deflecting (21, 22, 23) the swell with respect to the openings (111) of the columns (1), the deflecting means preferably comprising movable partitions (21, 22, 23) arranged on either side of and/or below the columns (1).

14. A wave and/or swell energy conversion assembly comprising a plurality of systems according to any one of claims 1 to 13, the systems being connected to each other.

15. Use of a system according to any of claims 1 to 13, wherein :

- the lower ends (110) are immersed in a volume of water subject to the action of the swell,

- each opening (111) accommodates water from the volume of water in the column (1) so as to form a chamber comprising a gas in the upper part (120) of the column (1), the upper part (120) delimiting with the level of the water inside the column (1) a space in which the gas can be compressed,

- the water in each column (1) is subject to the action of the swell that applies to the volume of water,

**EP 2 882 958 B1**

- the volume of each chamber increases and decreases alternately, with all the columns (1) not having the same water level at the same time, so that an overpressure is obtained in the hyperbaric chamber (2) relative to the hypobaric chamber (3),

- the pressure difference between the chambers (2, 3) causes gas to move from the hyperbaric chamber (2) to the hypobaric chamber (3) through the fluid connection, so that the turbine (6) is set in motion.

FIG. 2

FIG. 1

FIG. 3

FIG. 4

FIG. 5a

FIG. 5b

FIG. 6a

FIG. 6b

FIG. 7

FIG. 8

FIG. 9

**EP 2 882 958 B1**

## RÉFÉRENCES CITÉES DANS LA DESCRIPTION

**Documents brevets cités dans la description**

- GB 2161544 A
- DE 102009013014 A1
- JP H03294663 A
- US 2009001729 A1
- WO 2011162615 A2